(19) Europäisches Patentamt
European Patent Office
Office européen des brevets

(11) **EP 4 769 239 A1**

(12) **EUROPEAN PATENT APPLICATION**

(43) Date of publication:
**01.07.2026 Bulletin 2026/27**

(21) Application number: **25218788.5**

(22) Date of filing: **26.11.2025**

(51) International Patent Classification (IPC):
**G06N 10/20** (2022.01)     **G06N 10/60** (2022.01)

(52) Cooperative Patent Classification (CPC):
**G06N 10/60; G06N 10/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.12.2024 JP 2024233163**

(71) Applicant: **FUJITSU LIMITED**
**Kawasaki-shi, Kanagawa 211-8588 (JP)**

(72) Inventor: **NAGAI, Toshiaki**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD,
INFORMATION PROCESSING DEVICE**

(57) An information processing program for causing a computer to execute a process including: setting first and second functions, for a quantum circuit used when solving a combinatorial optimization problem and including, for each layer, a first partial circuit representing an action of a mixer unitary operator and a second partial circuit representing an action of a cost unitary operator, the first function representing a first variational parameter of the first partial circuit, the second function representing a second variational parameter of the second partial circuit; and calculating a solution to the combinatorial optimization problem by updating a value of a first transformation parameter related to the first function and a value of a second transformation parameter related to the second function so as to optimize an expected value of a cost function corresponding to the combinatorial optimization problem by using the quantum circuit after setting the first function and the second function.

FIG.1

**Description**

FIELD

The embodiments discussed herein are related to an information processing program, an information processing method, and an information processing device.

BACKGROUND

Conventionally, there is a quantum approximate optimization algorithm (QAOA) technique for solving a combinatorial optimization problem by using a multilayer quantum circuit having two types of variational parameters per layer. The QAOA solves a combinatorial optimization problem by searching for an appropriate value of a variational parameter so as to minimize an expected value of a cost function, for example. The two types of variational parameters are a variational parameter related to a mixer unitary operator and a variational parameter related to a cost unitary operator.

According to one related art, for example, values of parameters of QAOA are selected by a Bayesian optimizer. In addition, for example, there is a technique of selectively arranging multiple qubits in a spatial structure. In addition, for example, there is a technique in which a sequence of resonant optical pulses having non-constant durations and non-constant optical phases is applied to at least one of multiple qubits. For example, refer to U.S. Patent No. 10846366, Published Japanese-Translation of PCT Application, Publication No. 2021-536610, and Japanese Laid-Open Patent Publication No. 2023-103427.

SUMMARY

It is desirable in one aspect of the embodiments to at least solve the above problems in the conventional technologies.

According to an aspect of an embodiment, an information processing program for causing a computer to execute a process including: setting a first function and a second function, for a quantum circuit including, for each layer, a first partial circuit representing an action of a mixer unitary operator and a second partial circuit representing an action of a cost unitary operator, the quantum circuit being used when solving a combinatorial optimization problem, the first function representing a first variational parameter related to the first partial circuit, the first function being a combination of a monotonically decreasing function whose absolute value monotonically decreases and a first sine function, and the second function representing a second variational parameter related to the second partial circuit, the second function being a combination of a monotonically increasing function whose absolute value monotonically increases and a second sine function; and calculating a solution to the combinatorial optimization problem by updating a value of a first transformation parameter related to the first function and a value of a second transformation parameter related to the second function so as to optimize an expected value of a cost function corresponding to the combinatorial optimization problem by using the quantum circuit after setting the first function and the second function.

BRIEF DESCRIPTION OF DRAWINGS

Reference is made, by way of example only, to the following drawings in which:

Fig. 1 is an explanatory diagram depicting an example of an information processing method according to an embodiment.
Fig. 2 is an explanatory diagram depicting an example of an information processing system 200.
Fig. 3 is a block diagram of an example of a hardware configuration of an information processing device 100.
Fig. 4 is a block diagram depicting an example of a hardware configuration of a quantum computing device 201.
Fig. 5 is a block diagram depicting a functional configuration example of the information processing device 100.
Fig. 6 is an explanatory diagram depicting an example of operation of the information processing device 100.
Fig. 7 is an explanatory diagram depicting an example of the operation of the information processing device 100.
Fig. 8 is an explanatory diagram depicting an example of an effect.
Fig. 9 is an explanatory diagram depicting an example of an effect.
Fig. 10 is an explanatory diagram depicting an example of an effect.
Fig. 11 is an explanatory diagram depicting an example of an effect.
Fig. 12 is a flowchart depicting an example of an overall processing procedure.
Fig. 13 is a flowchart depicting an example of a procedure of a calculation process.

DESCRIPTION OF EMBODIMENTS

First, problems associated with the conventional techniques are discussed. With the related art, it may be difficult to accurately solve a combinatorial optimization problem. More specifically, when the number of layers of the quantum circuit is increased, the number of variational parameters increases and thus, there is a problem in that it is difficult to search for an appropriate value of the variational parameter.

Embodiments of an information processing program, an information processing method, and an information processing device according to the present disclosure are described in detail below with reference to the accompanying drawings.

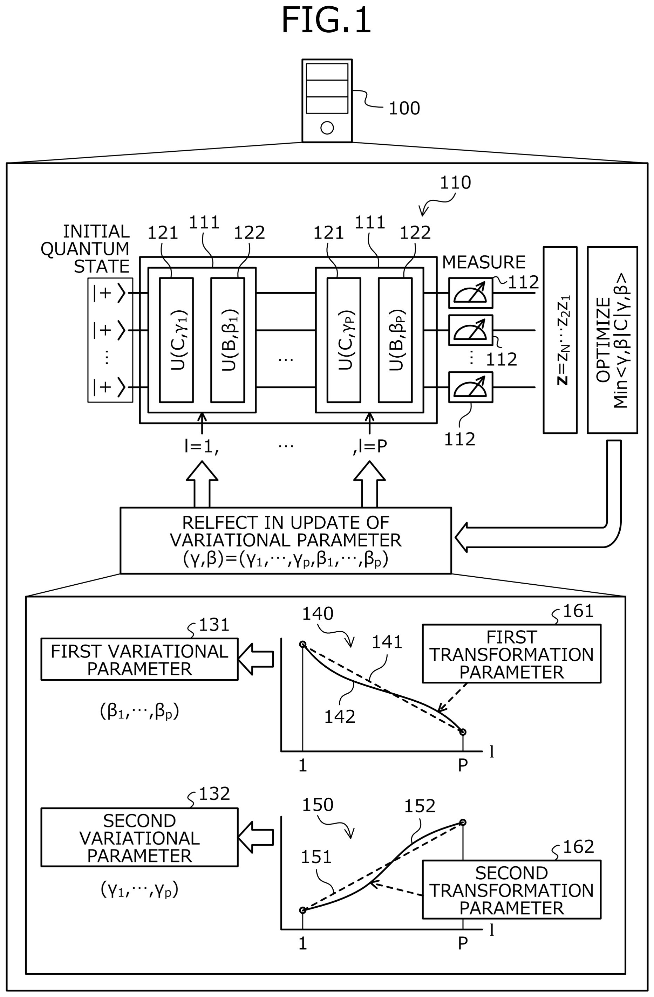

Fig. 1 is an explanatory diagram depicting an example of an information processing method according to an embodiment. The information processing device 100 is a computer for solving a combinatorial optimization problem. The information processing device 100 is, for example, a server or a personal computer (PC).

A combinatorial optimization problem is a problem that seeks to find solutions of the combinations of variables that optimize the value of an objective function under constraint conditions. Conventionally, as a method of solving a combinatorial optimization problem, for example, there is a quantum approximation optimization algorithm (QAOA) using a gate type quantum computer. QAOA is a technique based on, for example, a variational quantum algorithm. QAOA is a method of solving a combinatorial optimization problem by using a quantum circuit including multiple variational parameters.

Quantum circuits utilized in QAOA have one or more layers. Each layer includes a pair of a cost circuit that is a partial circuit for applying a cost unitary operator to a quantum state and a mixer circuit that is a partial circuit for applying a mixer unitary operator to the quantum state. The cost circuit has a variational parameter $\gamma$. The cost unitary operator is expressed as an exponential function whose exponent part includes the cost Hamiltonian with the variational parameter $\gamma$. The mixer circuit has a variational parameter $\beta$. The mixer unitary operator is expressed as an exponential function whose exponent part includes the mixer Hamiltonian to which the variational parameter $\beta$ is applied. The quantum circuit realizes a function of developing an input quantum state and obtaining an output quantum state by one or more layers. The input is also called, for example, an initial quantum state. The output is also called, for example, a trial quantum state.

For example, the QAOA sets a quantum circuit by setting a cost Hamiltonian using an Ising model or the like, based on a cost function of a combinatorial optimization problem serving as an objective function. For example, the QAOA, using a quantum circuit, solves the combinatorial optimization problem by repeating a series of processes of updating multiple variational parameters until a predetermined end condition is satisfied so as to minimize an expected value of energy represented by the cost function. The predetermined end condition is, for example, that the expected value of the energy becomes equal to or less than a predetermined threshold value.

The series of processes includes, for example, a process of setting an initial quantum state. The series of processes includes, for example, a process of developing a set initial quantum state using a quantum circuit to obtain a trial quantum state. The series of processes includes, for example, a process of calculating an expected value of the energy represented by a cost function corresponding to the obtained trial quantum state. The series of processes includes, for example, a process of updating the variational parameters in a direction of minimizing the expected value of the energy represented by the cost function, based on the expected value of the energy represented by the calculated cost function. For example, the QAOA randomly sets an initial quantum state when performing a first series of the processes. For example, the QAOA may set the previous trial quantum state as the current initial quantum state when performing the second and subsequent series of the processes.

When the variational parameters are optimized by repeatedly performing a series of the processes until a predetermined end condition is satisfied, the trial quantum state approaches the optimal solution. When the variational parameters are optimized, the probability that the value of the variable string corresponding to the combination of measurement results of the Z component of the Pauli spin operator for each qubit in the trial quantum state is a good solution to the combinatorial optimization problem is improved.

The process of setting the initial quantum state is realized by, for example, a classical computer. The process of developing the initial quantum state to obtain the trial quantum state is realized by, for example, a gated quantum computer. The process of calculating the expected value of the energy represented by the cost function is realized by, for example, a gate type quantum computer. The process of updating the plurality of variational parameters is realized by, for example, a classical computer.

For example, a Grid method, a Broyden Fletcher Goldfarb Shanno (BFGS) method, a Powell method, or the like is used for the process of updating the variational parameters. For QAOA, for example, Farhi, Edward, Jeffrey Goldstone, and Sam Gutmann. "A quantum approximate optimization algorithm." arXiv preprint arXiv:1411.4028 (2014) may be referred to.

More specifically, according to the Ising model, the combinatorial optimization problem is expressed by a problem of minimizing a cost function $C(z)$ having a variable $z_i$ taking a value of +1 or -1. Here, i=1 to N. More specifically, the cost function is defined by the following formula (1). z is a variable string. More specifically, $z=z_N...z_2z_1$. $c_i$ is a primary weighting

coefficient. $c_{,j}$ is a quadratic weighting coefficient. The cost function may include a third or higher order term.

$$C(z) = \sum_{i=1}^{N} c_i \, z_i + \sum_{i=1}^{N} \sum_{j=i+1}^{N} c_{i,j} \, z_i \, z_j \quad ...(1)$$

More specifically, the trial function of QAOA is defined by the above formula (1) representing a cost function and the following formulas (2) to (10). The trial function is, for example, a variational trial function. P is the number of layers of the quantum circuit. P$\geq$1. z is the variable string described above. The following formula (2) represents an energy operator. The energy operator is also referred to as a cost operator. $\sigma^z_i$ is the Z component of the Pauli spin operator. The following formula (3) represents a mixer operator. $\sigma^x_i$ is the X component of the Pauli spin operator. The mixer operator may be another type of mixer operator, such as an XY-Mixer. For other types of mixer operators, such as XY-Mixer, reference may be made to, for example, Hadfield, Stuart, et al. "From the quantum approximate optimization algorithm to a quantum alternating operator ansatz." Algorithms 12.2 (2019): 34.

$$C = C(\sigma^z) = \sum_{i=1}^{N} c_i \, \sigma^z_i + \sum_{i=1}^{N} \sum_{j=i+1}^{N} c_{i,j} \, \sigma^z_i \, \sigma^z_j \quad ...(2)$$

$$B = -\sum_{i=1}^{N} \sigma^x_i \quad ...(3)$$

The following expression (4) represents the cost unitary operator. The cost unitary operator is an exponential function including an energy operator to which the variational parameter $\gamma_l$ is assigned in an exponent part. 1 =1~P. The variational parameter $\gamma_l$ is set for each layer of the quantum circuit. The cost unitary operator represents an action on problem setting in a quantum circuit. The following formula (5) represents the mixer unitary operator. The mixer unitary operator is an exponential function including the mixer operator to which the variational parameter $\beta_l$ is given in the exponent part. The variational parameter $\beta_l$ is set for each layer of the quantum circuit. The mixer unitary operator represents an action on a search space in a quantum circuit.

$$U(C, \gamma_l) = \exp[-i\gamma_l C] \quad ...(4)$$

$$U(B, \beta_l) = \exp[-i\beta_l B] \quad ...(5)$$

The following expression (6) represents an initial quantum state. The initial quantum state is, for example, a ground state of a mixer operator. The following formula (7) represents a trial quantum state. $\gamma=(\gamma_1, \gamma_2, ..., \gamma_P)$. $\beta=(\beta_1, \beta_2, ..., \beta_P)$. $\gamma_1, \gamma_2, ...,$ and $\gamma_P$ are real numbers. $\beta_1, \beta_2, ...,$ and $\beta_P$ are real numbers. The following expression (8) represents an expected value of the energy operator. The following expression (8) corresponds to energy.

$$|s> = |+>_N \, ... |+>_2 \, |+>_1 \quad ...(6)$$

$$|\gamma, \beta> = [U(B, \beta_P)U(C, \gamma_P)] \, ... \, [U(B, \beta_1)U(C, \gamma_1)]|s> \quad ...(7)$$

$$E = <\gamma, \beta|C|\gamma, \beta> \quad ...(8)$$

Here, when the number of layers P of the quantum circuit approaches infinity, quantum annealing may be simulated. Simulating quantum annealing corresponds to increasing $\gamma_l$ from $\gamma_1$ to $\gamma_P$ and decreasing $\beta_l$ corresponding to the strength of the transverse magnetic field from $\beta_1$ to $\beta_P$. Theoretically, in the QAOA, although the number of layers P is finite, as the number of layers P is increased, the ability to express the quantum state corresponding to the solution may be improved, and the accuracy of solving the combinatorial optimization problem may be improved.

On the other hand, in practice, it may be difficult to accurately solve the combinatorial optimization problem. For example, when the number of layers P of the quantum circuit is increased, the number of variational parameters is increased. Therefore, there is a problem in that it is difficult to search for an appropriate value of the variational parameter. More specifically, the processing load and processing time necessary to search for an appropriate value of the variational parameter increase. Therefore, there is a problem in that it is difficult to increase the number of layers P in order to improve the accuracy of solving the combinatorial optimization problem.

On the other hand, a method of transforming the QAOA is conceivable in which the above-described variational parameters are expanded by a sine function and a cosine function, and expansion coefficients according to the sine function and the cosine function are set as targets for updating the values instead of the variational parameters. This method is also called, for example, a Fourier method. An expansion formula for expanding the variational parameter is defined by, for example, the following formulas (9) and (10).

$$\gamma_l = \sum_{k=1}^{q} u_k \sin\left[\left(k - \tfrac{1}{2}\right)\left(l - \tfrac{1}{2}\right)\pi/P\right] \quad \ldots (9)$$

$$\beta_l = \sum_{k=1}^{q} v_k \cos\left[\left(k - \tfrac{1}{2}\right)\left(l - \tfrac{1}{2}\right)\pi/P\right] \quad \ldots (10)$$

This method may reduce the number of parameters whose values are to be updated. For example, the number of parameters whose values are to be updated may be reduced to less than 2P. For this method, for example, Published Japanese-Translation of PCT Application, Publication No. 2021-536610 may be referred to.

However, in this method, from the viewpoint of approximating quantum annealing, it may not be preferable to expand multiple variational parameters by a sine function and a cosine function. Therefore, it may be difficult to accurately solve the combinatorial optimization problem.

Thus, in the present embodiment, an information processing method capable of improving the accuracy of solving a combinatorial optimization problem is described. More specifically, according to the information processing method, even when the number of layers P is increased to improve the ability to represent the quantum state, the number of parameters to be updated may be reduced and the accuracy of solving the combinatorial optimization problem may be improved.

In Fig. 1, an information processing device 100 stores a quantum circuit 110 used when solving a combinatorial optimization problem. The quantum circuit 110 includes P layers 111. The quantum circuit 110 defines an action on N qubits. The quantum circuit 110 includes multiple gates each representing an action on one or more qubits. The quantum circuit 110 includes a measuring unit 112 for each qubit. P is the number of layers.

The quantum circuit 110 includes, for each layer 111, a first partial circuit 121 representing the action of the mixer unitary operator and a second partial circuit 122 representing the action of the cost unitary operator. The layer 111 includes the first partial circuit 121 representing the action of the mixer unitary operator and the second partial circuit 122 representing the action of the cost unitary operator.

The mixer unitary operator is a formula that defines the behavior of layer 111. The mixer unitary operator represents, for example, an action on the search space. The mixer unitary operator includes, for example, a first variational parameter 131. The first variational parameter 131 is, for example, the above-described $\beta$, $\beta_2$, ..., $\beta_P$. The mixer unitary operator corresponds, for example, to formula (5) above. Therefore, the first partial circuit 121 representing the action of the mixer unitary operator has the first variational parameter 131. The information processing device 100 stores, for example, the first variational parameter 131 related to the first partial circuit 121.

The cost unitary operator is a formula that defines the behavior of the layer 111. The cost unitary operator represents, for example, an action on the problem setting. The cost unitary operator includes, for example, a second variational parameter 132. The second variational parameter 132 is, for example, $\gamma_1$, $\gamma_2$, ..., and $\gamma_P$ described above. The cost unitary operator corresponds, for example, to formula (4) above. For this reason, the second partial circuit 122 representing the action of the cost unitary operator has a second variational parameter 132. The information processing device 100 stores, for example, the second variational parameter 132 related to the second partial circuit 122.

Further, the information processing device 100 stores a cost function corresponding to the combinatorial optimization problem. The cost function represents, for example, energy. The cost function corresponds to, for example, the above formula (1). For example, an expected value of energy represented by the cost function is a target to be optimized in order to solve the combinatorial optimization problem. The optimization is, for example, minimization.

(1-1) The information processing device 100 sets, for the quantum circuit 110, a first function that is a combination of a monotonically decreasing function and a first sine function and represents the first variational parameter 131 related to the first partial circuit 121. The first function represents a relationship between the order of each layer 111 from the top of the quantum circuit 110 and the value of the first variational parameter 131 related to the first partial circuit 121 included in the layer 111. Graph 140 represents the first function. A horizontal axis of Graph 140 represents a variable 1 indicating the order of the layers 111. A vertical axis of Graph 140 represents, for example, the value of the first variational parameter 131.

The monotonically decreasing function is, for example, a function representing a monotonically decreasing straight line 141. The monotonic decrease may be, for example, a monotonic decrease in a broad sense. The monotonically decreasing function may be, for example, a function representing a monotonically decreasing curve instead of a straight line. The first sine function is, for example, a function representing a sine wave having, from the top of the quantum circuit 110, a value of zero for the first layer 111 and the P-th layer 111. The first function is, for example, a function representing the curve 142 by a combination of a monotonically decreasing function and a first sine function. More specifically, each point corresponding to the order of the layer 111 on the curve 142 represents the value of the first variational parameter 131 related to the first partial circuit 121 included in the layer 111.

(1-2) The information processing device 100 sets, for the quantum circuit 110, a second function that is a combination of a monotonically increasing function and a second sine function and that represents the second variational parameter 132 related to the second partial circuit 122. The second function represents a relationship between the order of each layer 111 from the top of the quantum circuit 110 and the value of the second variational parameter 132 related to the second partial circuit 122 included in the layer 111. Graph 150 represents the second function. A horizontal axis of Graph 150 represents a variable 1 indicating the order of the layers 111. A vertical axis of Graph 150 represents, for example, the value of the second variational parameter 132.

The monotonically increasing function is, for example, a function representing a monotonically increasing straight line 151. The monotonic increase may be, for example, a monotonic increase in a broad sense. The monotonically increasing function may be, for example, a function representing a monotonically increasing curve instead of a straight line. The second sine function is, for example, a function representing a sine wave having a value of zero for the first layer 111 and the P-th layer 111 from the top of the quantum circuit 110. The second function is, for example, a function representing a curve 152 by a combination of a monotonically increasing function and a second sine function. More specifically, each point corresponding to the order of the layer 111 on the curve 152 represents the value of the second variational parameter 132 related to the second partial circuit 122 included in the layer 111.

(1-3) The information processing device 100 calculates a solution to the combinatorial optimization problem using the quantum circuit 110. The information processing device 100 calculates a solution to the combinatorial optimization problem by updating the value of the first transformation parameter 161 and the value of the second transformation parameter 162 so as to optimize the expected value of the cost function, for example.

More specifically, the information processing device 100 sets the value of the first transformation parameter 161 and the value of the second transformation parameter 162 to initial values. Thereafter, specifically, using an external actual quantum computer, the information processing device 100 calculates, on the basis of the QAOA, a solution to the combinatorial optimization problem by repeatedly performing the following series of processes until an end condition is satisfied. The series of processes is multiple processes for appropriately updating the value of the first transformation parameter 161 and the value of the second transformation parameter 162.

The series of processes includes, for example, the following process 1, the following process 2, and the following process 3 in this order. The process 1 is, for example, calculating the value of the first variational parameter and the value of the second variational parameter based on the value of the first transformation parameter and the value of the second transformation parameter. The process 2 is, for example, calculating an expected value of a cost function based on the calculated value of the first variational parameter and the calculated value of the second variational parameter. The process 3 is, for example, updating the value of the first transformation parameter and the value of the second transformation parameter based on the calculated expected value when the predetermined end condition is not satisfied.

Accordingly, the information processing device 100 may improve the accuracy of solving the combinatorial optimization problem. For example, compared to a case where the number of layers P of the quantum circuit 110 is increased to improve the ability of the quantum circuit 110 to express a quantum state, the information processing device 100 may reduce the number of parameters whose values are to be updated. Therefore, even when the number of layers P is increased, the information processing device 100 may suppress an occurrence of a problem in which the processing load and the processing time necessary to solve the combinatorial optimization problem increase and may improve the accuracy of solving the combinatorial optimization problem. In addition, the information processing device 100 may reduce the processing load and the processing time necessary to solve the combinatorial optimization problem.

Here, while an instance in which the information processing device 100 uses an external real quantum computer has been described, the present disclosure is not limited hereto. For example, the information processing device 100 may be an actual machine of a quantum computer. Further, for example, the information processing device 100 may use an internal quantum simulator.

Here, while an instance in which functions of the information processing device 100 are realized by a single computer has been described, the present disclosure is not limited hereto. For example, functions of the information processing device 100 may be realized by cooperation of multiple computers. For example, functions of the information processing device 100 may be implemented on a cloud.

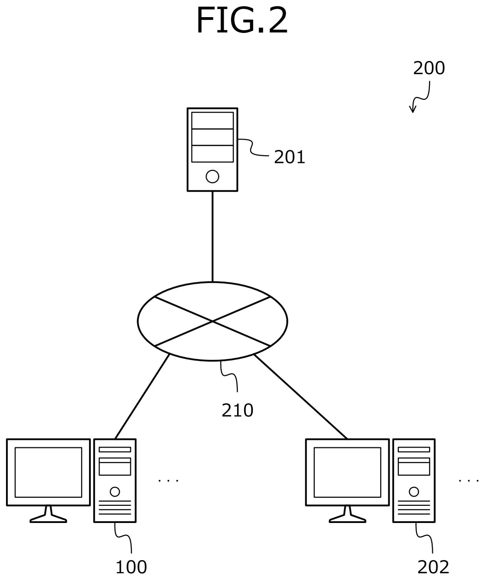

Next, an example of an information processing system 200 to which the information processing device 100 depicted in Fig. 1 is applied is described with reference to Fig. 2.

Fig. 2 is an explanatory diagram depicting an example of the information processing system 200. In Fig. 2, the information processing system 200 includes the information processing device 100, a quantum computing device 201, and a client apparatus 202.

In the information processing system 200, the information processing device 100 and the quantum computing device 201 are connected via a wired or wireless network 210. The network 210 is, for example, a local area network (LAN), a wide area network (WAN), the Internet, or the like. In the information processing system 200, the information processing device 100 and the client apparatus 202 are connected via a wired or wireless network 210.

The information processing device 100 is a computer that controls the quantum computing device 201. The information processing device 100 obtains a processing request requesting to solve a combinatorial optimization problem. For example, the information processing device 100 obtains the processing request by receiving the processing request from the client apparatus 202. For example, the information processing device 100 may obtain the processing request by receiving an input of the processing request based on an operation input of the user.

The processing request includes, for example, definition information defining a combinatorial optimization problem. The definition information may include, for example, a definition of a cost function, an energy operator, a mixer operator, a cost unitary operator, a mixer unitary operator, or the like. The definition information may include, for example, definitions of a first variational parameter related to a mixer unitary operator, a second variational parameter related to a cost unitary operator, and the like.

The definition information may include, for example, definitions of a first transformation parameter defining a first function representing the first variational parameter and a second transformation parameter defining a second function representing the second variational parameter. The definition of the first transformation parameter includes, for example, a first transformation expression that allows the first variational parameter and the first transformation parameter to be mutually transformed. The definition of the second transformation parameter includes, for example, a second transformation expression that allows the second variational parameter and the second transformation parameter to be mutually transformed.

The information processing device 100 sets a quantum circuit having P layers according to the obtained processing request. The information processing device 100 obtains a cost function according to the obtained processing request. The information processing device 100 obtains a first transformation formula and the second transformation formula based on the definition information according to the obtained processing request. The information processing device 100 sets initial values for the first transformation parameter and the second transformation parameter.

The information processing device 100 calculates a solution to the combinatorial optimization problem by repeatedly performing a series of processes of updating the first transformation parameter and the second transformation parameter using the set quantum circuit until an end condition is satisfied. The end condition is, for example, that a series of processes is performed a predetermined number of times. The end condition may be, for example, that an expected value of energy represented by the cost function is equal to or less than a predetermined threshold.

The series of processes includes, for example, the following process 1, the following process 2, and the following process 3 in this order. The process 1 is, for example, calculating the value of the first variational parameter and the value of the second variational parameter based on the value of the first transformation parameter and the value of the second transformation parameter with reference to the first transformation formula and the second transformation formula. The process 2 is, for example, calculating an expected value of energy represented by the cost function based on the calculated value of the first variational parameter and the calculated value of the second variational parameter. The process 3 is, for example, updating the value of the first transformation parameter and the value of the second transformation parameter based on the calculated expected value when the predetermined end condition is not satisfied.

For example, the information processing device 100 refers to the first transformation formula and the second transformation formula to calculate the value of the first variational parameter and the value of the second variational parameter based on the value of the first transformation parameter and the value of the second transformation parameter, thereby performing the process 1.

For example, the information processing device 100 controls the quantum computing device 201 to execute the set quantum circuit and performs the process 2 by calculating an expected value of the energy, represented by the cost function, based on a result of executing the quantum circuit. More specifically, the information processing device 100 transmits an execution request requesting execution of the quantum circuit to the quantum computing device 201. The execution request includes, for example, the set quantum circuit. The execution request includes, for example, the calculated value of the first variational parameter and the calculated value of the second variational parameter. More specifically, the information processing device 100 receives a trial quantum state from the quantum computing device 201 as a result of executing the quantum circuit. The information processing device 100 calculates an expected value of energy based on the received trial quantum state.

For example, when the predetermined end condition is not satisfied, the information processing device 100 performs the process 3 by updating the value of the first transformation parameter and the value of the second transformation parameter, based on the calculated expected value. More specifically, the information processing device 100 determines whether a predetermined end condition is satisfied. More specifically, when the predetermined end condition is not satisfied, the information processing device 100 updates the value of the first transformation parameter and the value of the second transformation parameter in a direction of minimizing the expected value of the energy represented by the cost function based on the calculated expected value.

The information processing device 100 outputs the calculated solution to the combinatorial optimization problem. The information processing device 100 transmits, for example, a solution to the combinatorial optimization problem to the client apparatus 202. For example, the information processing device 100 may output the solution to the combinatorial optimization problem so that the user may refer to the solution. The information processing device 100 is, for example, a server or a PC.

The quantum computing device 201 is a computer that executes requested computation processing. The quantum computing device 201 may perform quantum computation. The quantum computing device 201 may be capable of performing classical computation. The quantum computing device 201 executes a quantum circuit under the control of the information processing device 100. The quantum computing device 201 executes the quantum circuit, for example, upon receiving an execution request requesting execution of the quantum circuit from the information processing device 100. More specifically, the quantum computing device 201 develops the initial quantum state by executing the quantum circuit and specifies the trial quantum state.

The quantum computing device 201 returns a result of executing the quantum circuit to the information processing device 100. For example, the quantum computing device 201 returns a trial quantum state to the information processing device 100 as a result of executing the quantum circuit. The quantum computing device 201 is, for example, an actual machine of a quantum computer. The quantum computing device 201 may be, for example, a classical computer that activates a quantum simulator. The classical computer is, for example, a server or a PC.

The client device 202 is a computer utilized by a user who desires to solve a combinatorial optimization problem. The client apparatus 202 generates based on the operation input of the user, a processing request for requesting to solve the combinatorial optimization problem and transmits the processing request to the information processing device 100. The client apparatus 202 receives the solution to the combinatorial optimization problem from the information processing device 100. The client device 202 outputs the solution to the combinatorial optimization problem so that the user may refer to the solution. The client device 202 is, for example, a PC, a tablet terminal, or a smartphone.

Here, while an instance in which the information processing device 100 and the quantum computing device 201 are different apparatuses has been described, the present disclosure is not limited hereto. For example, the information processing device 100 may have a function of the quantum computing device 201 and may also operate as the quantum computing device 201. Further, while a case where the information processing device 100 and the client apparatus 202 are different apparatuses has been described, embodiments of the present invention are not limited thereto. For example, the information processing device 100 may have a function as the client apparatus 202 and may also operate as the client apparatus 202.

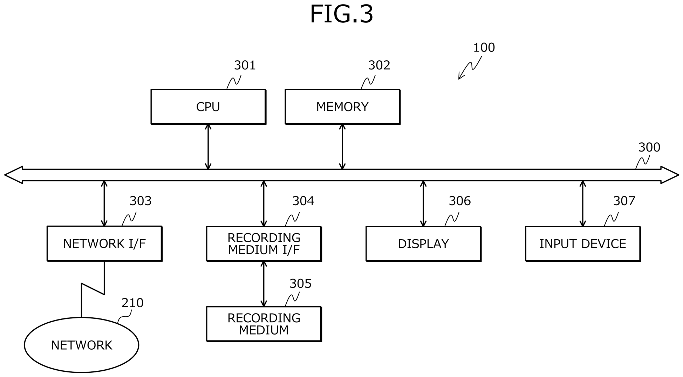

Next, with reference to Fig. 3, an example of a hardware configuration of the information processing device 100 is described.

Fig. 3 is a block diagram of an example of the hardware configuration of the information processing device 100. In Fig. 3, the information processing device 100 has a central processing unit (CPU) 301, a memory 302, and a network interface (I/F) 303. The information processing device 100 also has a recording medium I/F 304, a recording medium 305, a display 306, and an input device 307. Further, the components are connected to each other by a bus 300.

Here, the CPU 301 governs overall control of the information processing device 100. The memory 302, for example, includes a read-only memory (ROM), a random access memory (RAM), and a flash-ROM. In particular, for example, the flash-ROM and/or ROM stores therein various programs and the RAM is used as a work area of the CPU 301. Programs stored to the memory 302 are loaded onto the CPU 301, whereby encoded processes are executed by the CPU 301.

The network I/F 303 is connected to the network 210 via a communications line and is connected to other computers through the network 210. Further, the network I/F 303 administers an internal interface with the network 210 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disk drive, a solid-state drive (SSD), a universal serial bus (USB) port, or the like. The recording medium 305 is a nonvolatile memory storing data written thereto under the control of the recording medium I/F 304. The recording medium 305 is, for example, a disk, a semiconductor memory, a USB memory, or the like. The recording medium 305 may be removable from the information processing device 100.

The display 306 displays data such as a cursor, icons, toolboxes, documents, images, or functional information. The display 306 is, for example, a cathode ray tube (CRT), a liquid crystal display, or an organic electroluminescence (EL) display. The input device 307 includes keys for inputting characters, numbers, or various instructions, and inputs data. The input device 307 is, for example, a keyboard or a mouse. The input device 307 may be, for example, a touch panel-type input pad, a numeric keypad, or the like.

The information processing device 100 may include, for example, a camera in addition to the above-described components. Further, the information processing device 100 may include, for example, a printer, a scanner, a microphone, a speaker, or the like in addition to the above-described components. The information processing device 100 may include, for example, the recording medium I/F 304 and/or the recording medium 305 in plural. The information processing device 100 may omit, for example, the display 306 and/or the input device 307. The information processing device 100 may omit the recording medium I/F 304 and the recording medium 305, for example.

In an instance in which the quantum computing device 201 is a classical computer that starts the quantum simulator, an example of a hardware configuration of the quantum computing device 201, for example, is a same as the example of the hardware configuration of the information processing device 100 depicted in Fig. 3 and thus, description thereof is omitted herein.

On the other hand, an instance in which the quantum computing device 201 is an actual quantum computer is conceivable.

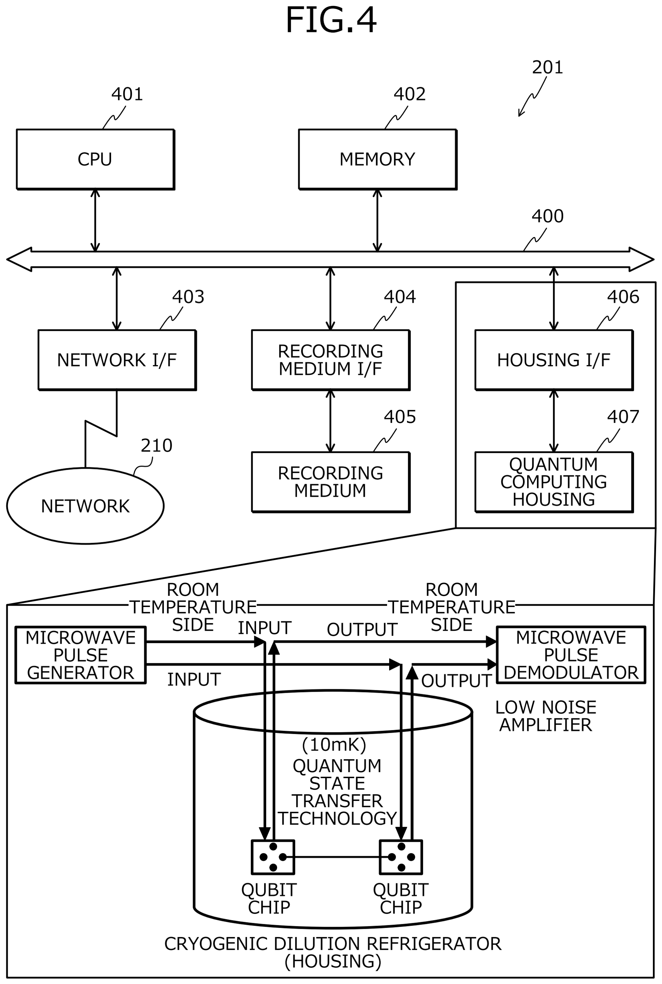

With reference to Fig. 4, an example a hardware configuration of the quantum computing device 201 in an instance in which the quantum computing device 201 is an actual quantum computer is described.

Fig. 4 is a block diagram depicting an example of a hardware configuration of the quantum computing device 201. In Fig. 4, the quantum computing device 201 has a CPU 401, a memory 402, a network I/F 403, a recording medium I/F 404, and a recording medium 405. The quantum computing device 201 further has a quantum computing housing I/F 406 and a quantum computing housing 407. Further, the components are coupled by a bus 400.

Here, the CPU 401 governs overall control of the quantum computing device 201. The memory 402 includes, for example, a ROM, a RAM, and a flash ROM. For example, the flash ROM and the ROM store various programs, and the RAM is used as a work area for the CPU 401. The programs stored in the memory 402 are loaded onto the CPU 401, whereby the CPU 401 executes encoded processes.

The network I/F 403 is coupled to the network 210 through a communications line and is coupled to other computers via the network 210. The network I/F 403 administers an internal interface with the network 210 and controls the input and output of data from other computers. The network I/F 403 is, for example, a modem or a LAN adapter.

The recording medium I/F 404 controls the reading and writing of data with respect to the recording medium 405 under the control of the CPU 401. The recording medium I/F 404 is, for example, a disk drive, an SSD, a USB port, etc. The recording medium 405 is a nonvolatile memory that stores therein data written thereto under the control of the recording medium I/F 404. The recording medium 405 is, for example, a disk, a semiconductor memory, a USB memory, etc. The recording medium 405 may be removable from the quantum computing device 201.

The quantum computing housing I/F 406 controls access to the quantum computing housing 407 under the control of the CPU 401. The quantum computing housing I/F 406 converts signals output from the CPU 401 into input signals for the quantum computing housing 407 using a microwave pulse generator and transmits the converted signals to the quantum computing housing 407. The quantum computing housing I/F 406 converts the signals output from the quantum computing housing 407 into input signals for the CPU 401 using a microwave pulse demodulator and transmits the converted signals to the CPU 401. The quantum computing housing 407 is a computing device equipped with one or more qubit chips cooled to an extremely low temperature of 10 mK. Each qubit chip represents, for example, a logical qubit. The quantum computing housing 407 performs a predetermined computation according to an input signal using one or more qubit chips, and outputs an output signal corresponding to the result of performing the predetermined computation.

In addition to the components above, the quantum computing device 201 may have, for example, a keyboard, a mouse, a display, a printer, a scanner, a microphone, a speaker, etc. The quantum computing device 201 may also have the recording medium I/F 404 and recording medium 405 in plural. Further, in the quantum computing device 201, the recording medium I/F 404 and the recording medium 405 may be omitted. Further, the qubit chip in the quantum computing housing 407 may be controlled by a method other than microwaves. The qubit chip in the quantum computing housing 407 may implement, for example, optical qubits.

An example of a hardware configuration example of the client device 202 is, for example, similar to the example of the hardware configuration of the information processing device 100 depicted in Fig. 3 and thus, description thereof is omitted.

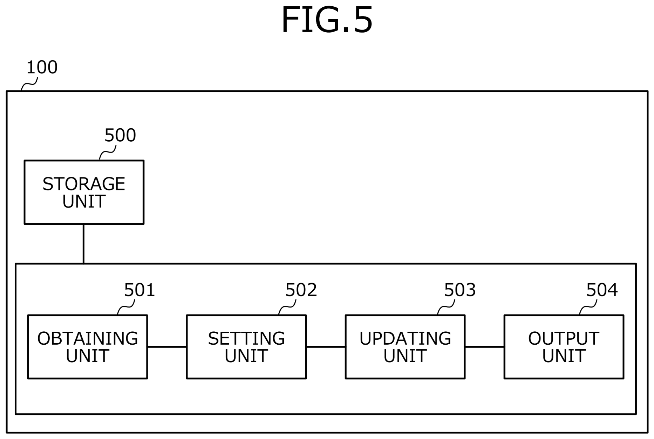

Next, a functional configuration example of the information processing device 100 is described with reference to Fig. 5.

Fig. 5 is a block diagram depicting a functional configuration example of the information processing device 100. The information processing device 100 includes a storage unit 500, an obtaining unit 501, a setting unit 502, an updating unit 503, and an output unit 504.

The storage unit 500 is implemented by, for example, a storage area such as the memory 302 or the recording medium 305 depicted in Fig. 3. Hereinafter, while a case where the storage unit 500 is included in the information processing device 100 is described, the present disclosure is not limited hereto. For example, the storage unit 500 may be included in a device different from the information processing device 100, and the storage content of the storage unit 500 may be referable from the information processing device 100.

The obtaining unit 501 to the output unit 504 function as an example of a control unit. More specifically, the functions of the obtaining unit 501 to the output unit 504 are realized, for example, by causing the CPU 301 to execute a program stored in a storage area such as the memory 302 or the recording medium 305 depicted in Fig. 3 or by the network I/F 303. The processing result of each functional unit is stored to for example, a storage area such as the memory 302 or the recording medium 305 depicted in Fig. 3.

The storage unit 500 stores various types of information referred to or updated in the processes by the functional units. The storage unit 500 stores, for example, a structure of a predetermined quantum circuit used when solving a combinatorial optimization problem. The predetermined quantum circuit realizes a function of developing an initial quantum state as an input and obtaining a trial quantum state as an output. A given quantum circuit has P layers. P is the number of layers. $P \geq 1$. A given quantum circuit defines an action on N qubits representing a quantum state. $N \geq 1$.

The predetermined quantum circuit includes, for each layer, a first partial circuit representing the effect of a mixer unitary operator and a second partial circuit representing the effect of a cost unitary operator. The action of each layer is defined by the mixer unitary operator and the cost unitary operator. The mixer unitary operator represents, for example, an action on the search space. The cost unitary operator represents, for example, an action on the problem setting. The action of each layer is defined by the mixer unitary operator and the cost unitary operator.

The mixer unitary operator includes, for example, a first variational parameter. Thus, the first partial circuit representing the action of the mixer unitary operator has a first variational parameter. The cost unitary operator includes, for example, a second variational parameter. Thus, the second partial circuit representing the effect of the cost unitary operator has a second variational parameter. The structure of the predetermined quantum circuit is obtained by, for example, the obtaining unit 501. The structure of the predetermined quantum circuit may be set in advance by a user, for example.

The storage unit 500 stores, for example, a cost function corresponding to a combinatorial optimization problem. The cost function is subject to minimization or maximization. The cost function corresponds to the objective function. The cost function is obtained by, for example, the obtaining unit 501. The cost function may be preset by the user, for example.

The storage unit 500 stores, for example, the value of the first variational parameter related to the first partial circuit representing the action of the mixer unitary operator in each layer. The initial value of the first variational parameter is calculated and set by the updating unit 503, for example. The initial value of the first variational parameter may be set by the setting unit 502, for example. The initial value of the first variational parameter may be set in advance by the user, for example. The value of the first variational parameter is calculated and updated by the updating unit 503, for example.

The storage unit 500 stores, for example, the value of the second variational parameter related to the second partial circuit representing the action of the cost unitary operator in each layer. The initial value of the second variational parameter is calculated and updated by the updating unit 503, for example. The initial value of the second variational parameter may be set by the setting unit 502, for example. The initial value of the second variational parameter may be set in advance by the user, for example. The value of the second variational parameter is calculated and updated by the updating unit 503, for example.

The storage unit 500 stores, for example, a first function that is a combination of a monotonically decreasing function and a first sine function and represents a combination of values of first variational parameters related to a first partial circuit representing an action of a mixer unitary operator in each layer. The first function is set by the setting unit 502, for example.

The storage unit 500 stores, for example, the value of the first transformation parameter related to the first function. The initial value of the first transformation parameter is set by the setting unit 502, for example. The initial value of the first transformation parameter may be set in advance by the user, for example. The value of the first transformation parameter is calculated and updated by the updating unit 503, for example.

The storage unit 500 stores, for example, a second function obtained by combining a monotonically increasing function and a second sine function, the second function representing a combination of values of second variational parameters related to a second partial circuit representing an action of a cost unitary operator in each layer. The second function is set by the setting unit 502, for example.

The storage unit 500 stores, for example, the value of the second transformation parameter related to the second function. The initial value of the second transformation parameter is set by the setting unit 502, for example. The initial value of the second transformation parameter may be set in advance by the user, for example. The value of the second transformation parameter is calculated and updated by the updating unit 503, for example.

The storage unit 500 stores, for example, a predetermined end condition. The predetermined end condition controls the number of times a predetermined series of processes is repeatedly performed to solve the combinatorial optimization problem. The predetermined end condition is, for example, to perform the series of processes a predetermined number of times. The predetermined end condition may be, for example, that an expected value of energy is in a predetermined range. The predetermined range is, for example, a range equal to or less than a predetermined threshold.

The predetermined end condition may be, for example, that the amount of change in the expected value of energy is equal to or less than a predetermined threshold. The amount of change is, for example, a difference between an expected value of energy calculated when the series of processes is performed this time and an expected value of energy calculated when the series of processes is performed the previous time. The predetermined end condition is obtained by the obtaining unit 501, for example. The predetermined end condition may be set in advance by the user, for example.

The series of processes includes, for example, a process of setting an initial quantum state. The series of processes includes, for example, a process of developing a set initial quantum state using a quantum circuit and specifying a trial quantum state. The series of processes includes, for example, a process of calculating an expected value of energy represented by the cost function corresponding to the specified trial quantum state.

The series of processes includes, for example, a process of updating the value of the first transformation parameter and the value of the second transformation parameter in a direction that minimizes the expected value of the energy represented by the cost function, based on the expected value of the energy represented by the calculated cost function. The series of processes includes, for example, a process of updating the value of the first variational parameter and the value of the second variational parameter, based on the updated value of the first transformation parameter and the updated value of the second transformation parameter. The series of processes is executed by, for example, the updating unit 503.

The obtaining unit 501 obtains various types of information used for the processes by the functional units. The obtaining unit 501 stores the obtained various types of information to the storage unit 500 or outputs the obtained various types of information to the functional units. The obtaining unit 501 may output various types of information stored in the storage unit 500 to the functional units. The obtaining unit 501 obtains various types of information based on, for example, an operation input of a user. For example, the obtaining unit 501 may receive various types of information from an apparatus different from the information processing device 100.

The obtaining unit 501 obtains, for example, a processing request requesting to solve a combinatorial optimization problem. The processing request may include, for example, a structure of a predetermined quantum circuit. The processing request may include, for example, a cost function. The processing request may include, for example, an energy operator, a cost unitary operator, a mixer operator, and a mixer unitary operator.

The processing request may include, for example, initial values of the first variational parameter and the second variational parameter. The processing request may include, for example, the first function and the second function. The processing request may include, for example, initial values of the first transformation parameter and the second transformation parameter. The processing request may include, for example, a predetermined end condition.

More specifically, the obtaining unit 501 obtains the processing request by receiving an input of the processing request based on an operation input of the user. More specifically, the obtaining unit 501 may obtain the processing request by receiving the processing request from another computer. The other computer is, for example, the client device 202.

The obtaining unit 501 obtains, for example, a structure of a predetermined quantum circuit. More specifically, the obtaining unit 501 obtains the structure of the predetermined quantum circuit by receiving an input of the structure of the predetermined quantum circuit based on an operation input of the user. More specifically, the obtaining unit 501 may obtain the structure of the predetermined quantum circuit by receiving the structure of the predetermined quantum circuit from another computer. The other computer is, for example, the client device 202. More specifically, the obtaining unit 501 may obtain the structure of the predetermined quantum circuit by extracting the structure of the predetermined quantum circuit from the processing request.

The obtaining unit 501 obtains, for example, a cost function. More specifically, the obtaining unit 501 obtains the cost function by receiving an input of the cost function based on an operation input of the user. More specifically, the obtaining unit 501 may obtain the cost function by receiving the cost function from another computer. The other computer is, for example, the client device 202. More specifically, the obtaining unit 501 may obtain the cost function by extracting the cost function from the processing request.

The obtaining unit 501 obtains, for example, a predetermined end condition. More specifically, the obtaining unit 501 obtains the predetermined end condition by receiving an input of the predetermined end condition based on an operation input of the user. More specifically, the obtaining unit 501 may obtain the predetermined end condition by receiving the predetermined end condition from another computer. The other computer is, for example, the client device 202. More specifically, the obtaining unit 501 may obtain the predetermined end condition by extracting the predetermined end condition from the processing request.

The obtaining unit 501 may receive a start trigger for starting the process of any of the functional units. The start trigger is, for example, a predetermined operation input by the user. The start trigger may be, for example, reception of predetermined information from another computer. The start trigger may be, for example, output of predetermined information by any functional unit. For example, the obtaining unit 501 regards obtaining the processing request as a start trigger for starting the processes of the setting unit 502 and the updating unit 503.

The setting unit 502 sets, for the quantum circuit, the first function that is a combination of a monotonically decreasing function and a first sine function and represents a first variational parameter related to the first partial circuit. The monotonically decreasing function is, for example, a function representing a monotonically decreasing straight line. The monotonically decreasing function may be, for example, a function representing a monotonically decreasing curve. More specifically, the monotonically decreasing function is a function representing a monotonically decreasing straight line or curve whose both ends are the value of the first variational parameter related to the first partial circuit in the first layer of the quantum circuit and the value of the first variational parameter related to the first partial circuit in the last layer of the quantum circuit. More specifically, the first sine function is a function representing a sine wave that becomes zero for the first layer and the last layer of the quantum circuit. Accordingly, the setting unit 502 may convert the first transformation parameter into the first variational parameter by the first function.

The setting unit 502 sets, for example, an initial value of the first transformation parameter. More specifically, the setting unit 502 sets the initial value of the first transformation parameter by receiving an input of the initial value of the first transformation parameter, based on an operation input of the user. More specifically, the setting unit 502 may set the initial value of the first transformation parameter by receiving the initial value of the first transformation parameter from another computer. The other computer is, for example, the client device 202. More specifically, the setting unit 502 may set the initial value of the first transformation parameter by extracting the initial value of the first transformation parameter from the processing request. As described, the setting unit 502 may set the initial value of the first transformation parameter as a preparation for the updating unit 503 to start a process thereof.

The setting unit 502 may set, for example, an initial value of the first variational parameter. For example, when the updating unit 503 does not calculate the initial value of the first variational parameter based on the initial value of the first transformation parameter, the setting unit 502 may set the initial value of the first variational parameter. More specifically, the setting unit 502 may set the initial value of the first variational parameter by receiving an input of the initial value of the first variational parameter based on a user's operation input.

More specifically, the setting unit 502 may set the initial value of the first variational parameter by receiving the initial value of the first variational parameter from another computer. The other computer is, for example, the client device 202. More specifically, the setting unit 502 may set the initial value of the first variational parameter by extracting the initial value of the first variational parameter from the processing request. As described, the setting unit 502 may set the initial value of the first variational parameter in preparation for the updating unit 503 to start a process thereof.

The setting unit 502 sets, for the quantum circuit, the second function that is a combination of a monotonically increasing function and a second sine function and represents a second variational parameter related to the second partial circuit. The monotonically increasing function is, for example, a function representing a monotonically increasing straight line. The monotonically increasing function may be, for example, a function representing a monotonically increasing curve. More specifically, the monotonically increasing function is a function representing a monotonically increasing straight line or curve whose both ends are the value of the second variational parameter related to the second partial circuit in the first layer of the quantum circuit and the value of the second variational parameter related to the second partial circuit in the last layer of the quantum circuit. More specifically, the second sine function is a function representing a sine wave that becomes zero for the first layer and the last layer of the quantum circuit. Thus, the setting unit 502 may convert the second transformation parameter into the second variational parameter by the second function.

The setting unit 502 sets, for example, an initial value of the second transformation parameter. More specifically, the setting unit 502 sets the initial value of the second transformation parameter by receiving the input of the initial value of the second transformation parameter, based on the operation input of the user. More specifically, the setting unit 502 may set the initial value of the second transformation parameter by receiving the initial value of the second transformation parameter from another computer. The other computer is, for example, the client device 202. More specifically, the setting unit 502 may set the initial value of the second transformation parameter by extracting the initial value of the second transformation parameter from the processing request. As described, the setting unit 502 may set the initial values of the second transformation parameters in preparation for the updating unit 503 to start a process thereof.

The setting unit 502 may set, for example, an initial value of the second variational parameter. For example, when the updating unit 503 does not calculate the initial value of the second variational parameter based on the initial value of the second transformation parameter, the setting unit 502 may set the initial value of the second variational parameter. More specifically, the setting unit 502 may set the initial value of the second variational parameter by receiving an input of the initial value of the second variational parameter based on a user's operation input.

More specifically, the setting unit 502 may set the initial value of the second variational parameter by receiving the initial value of the second variational parameter from another computer. The other computer is, for example, the client device 202. More specifically, the setting unit 502 may set the initial value of the second variational parameter by extracting the initial value of the second variational parameter from the processing request. Thus, the setting unit 502 may set the initial value of the second variational parameter in preparation for the updating unit 503 to start a process thereof.

After the setting unit 502 sets the first function and the second function, the updating unit 503 updates and optimizes the value of the first transformation parameter and the value of the second transformation parameter so as to optimize the expected value of the energy represented by the cost function, using the quantum circuit. At this time, the updating unit 503 may execute the quantum circuit in the information processing device 100. The updating unit 503 may cooperate with an actual quantum computer capable of executing the quantum circuit. The actual machine of the quantum computer is, for example, the quantum computing device 201. Thus, the updating unit 503 calculates a solution to the combinatorial optimization problem based on the updated values of the first transformation parameters and the updated values of the second transformation parameters.

For example, the updating unit 503 calculates a solution to the combinatorial optimization problem by repeatedly performing a series of processes until a predetermined end condition is satisfied. More specifically, the series of processes includes a process of setting an initial quantum state. More specifically, the series of processes includes a process of calculating the value of the first variational parameter and the value of the second variational parameter, based on the value of the first transformation parameter and the value of the second transformation parameter with reference to the first function and the second function.

More specifically, the series of processes includes a process of developing the set initial quantum state using the quantum circuit in which the calculated value of the first variational parameter and the calculated value of the second variational parameter are set, and specifying a trial quantum state. More specifically, the series of processes includes a process of calculating an expected value of the energy represented by the cost function corresponding to the identified trial quantum state. More specifically, the series of processes includes a process of updating the value of the first transformation parameter and the value of the second transformation parameter in a direction of minimizing the expected value of the energy represented by the cost function based on the expected value of the energy represented by the calculated cost function.

The updating unit 503 sets, for example, an initial quantum state. More specifically, the updating unit 503 randomly sets the initial quantum state when performing the first series of processes. More specifically, when performing the second and subsequent series of processes, the updating unit 503 sets the trial quantum state identified when performing the previous series of processes as the initial quantum state. As a result, the updating unit 503 may appropriately set the initial quantum state to be developed in preparation for executing the quantum circuit.

For example, the updating unit 503 refers to the first function set by the setting unit 502 and calculates the value of the first variational parameter based on the value of the first transformation parameter. Thus, the updating unit 503 may set the initial value of the first variational parameter when performing the first series of processes. The updating unit 503 may appropriately update the value of the first variational parameter when performing the second and subsequent series of the processes.

For example, the updating unit 503 refers to the second function set by the setting unit 502 and calculates the value of the second variational parameter, based on the value of the second transformation parameter. Accordingly, the updating unit 503 may set the initial value of the second variational parameter when the first series of the processes is performed. The updating unit 503 may appropriately update the value of the second variational parameter when performing the second and subsequent series of the processes.

For example, the updating unit 503 develops the set initial quantum state by using the quantum circuit in which the calculated value of the first variational parameter and the calculated value of the second variational parameter are set, specifies a trial quantum state, and calculates an expected value of the energy represented by the cost function. The expected value of the energy corresponds to, for example, a trial quantum state. More specifically, the updating unit 503 transmits an execution request requesting execution of the quantum circuit to the actual quantum computer. The execution request may include, for example, the quantum circuit in which the value of the first variational parameter and the value of the second variational parameter are set, and the initial quantum state.

The updating unit 503 receives the result of executing the quantum circuit from the actual quantum computer. The result of executing the quantum circuit includes, for example, a result of measuring the specified trial quantum state. The updating unit 503 calculates an expected value of the energy represented by the cost function, based on a result of executing the quantum circuit. Thus, the updating unit 503 may specify the trial quantum state and calculate the expected value of the energy represented by the cost function in cooperation with the actual quantum computer.

For example, the updating unit 503 updates the value of the first transformation parameter and the value of the second transformation parameter in a direction minimizing the expected value of the energy represented by the cost function based on the expected value of the energy represented by the calculated cost function. The update is realized by, for example, a Grid method, a BFGS method, a Powell method, or the like. Thus, the updating unit 503 may optimize the value of the first transformation parameter and the value of the second transformation parameter, and indirectly optimize the value of the first variational parameter and the value of the second variational parameter.

For example, when a predetermined end condition is satisfied, the updating unit 503 specifies and measures the trial quantum state multiple times by using the quantum circuit in which the value of the first variational parameter and the value of the second variational parameter are set. More specifically, the updating unit 503 specifies and measures the trial quantum state multiple times by transmitting to the actual quantum computer, an execution request requesting execution of the quantum circuit multiple times.

The updating unit 503 calculates a solution to the combinatorial optimization problem by, for example, statistically processing a result of measuring the trial quantum state. Accordingly, the updating unit 503 may reduce the number of parameters whose values are to be directly updated, and may reduce the processing load and the processing time necessary to calculate a solution to the combinatorial optimization problem. The updating unit 503 may easily increase the depth of the quantum circuit, and may easily calculate a solution to the combinatorial optimization problem with high accuracy.

The output unit 504 outputs a processing result of at least one of the functional units. The output format is, for example, display on a display, print output to a printer, transmission to an external device by the network I/F 303, or storage to a storage area such as the memory 302 or the recording medium 305. Accordingly, the output unit 504 may notify the user of the processing result of at least one of the functional units, and the convenience of the information processing device 100 may be improved.

The output unit 504 outputs, for example, the solution to the combinatorial optimization problem calculated by the updating unit 503. More specifically, the output unit 504 outputs the solution to the combinatorial optimization problem calculated by the updating unit 503 so that the user may refer to the solution. More specifically, the output unit 504 transmits the solution to the combinatorial optimization problem calculated by the updating unit 503 to another computer. The other computer is, for example, the client device 202. Accordingly, the output unit 504 may make the solution to the combinatorial optimization problem available to the outside.

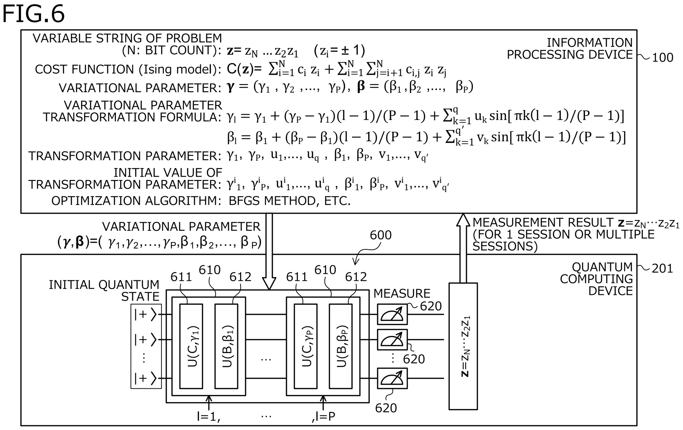

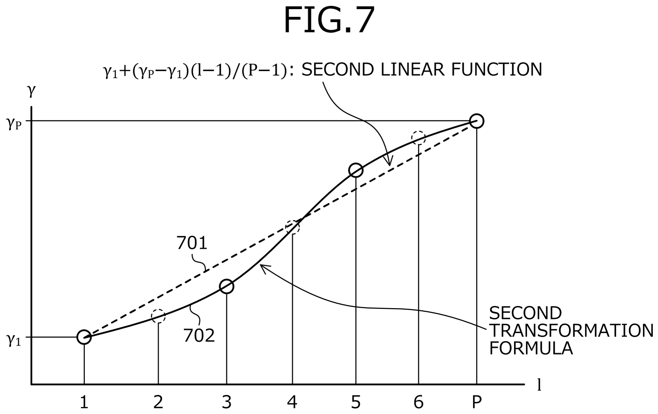

Next, an example of the operation of the information processing device 100 will be described with reference to Figs. 6 and 7.

Figs. 6 and 7 are explanatory diagrams depicting an example of the operation of the information processing device 100. In Fig. 6, the information processing device 100 stores a variable string z corresponding to a combinatorial optimization problem. The variable string z is a bit string of variables $z_N...z_2z_1$. $z_i$=+1 or $z_i$=-1. The information processing device 100 stores the cost function C(z) expressed by the Ising model. More specifically, the cost function C(z) is defined by the above expression (1).

The information processing device 100 stores the first variational parameter $\beta = (\beta_1, \beta_2, ..., \beta_P)$ related to the mixer unitary operator and the second variational parameter $\gamma = (\gamma_1, \gamma_2, ..., \gamma_P)$ related to the cost unitary operator. $\beta_1, \beta_2, ...,$ and $\beta_P$ are real numbers. $\gamma_1, \gamma_2..., \gamma_P$ are real numbers.

The information processing device 100 stores the first transformation formula that expresses the first variational parameter $\beta_l$ using a number of first transformation parameters less than P. The first transformation formula allows the first transformation parameter to be converted into the first variational parameter $\beta_l$. The first transformation formula is, for example, a combination of a first linear function representing a monotonically decreasing straight line and a first sine function. The first linear function is a function representing a straight line whose value monotonically decreases as the variable l indicating the order of layers increases. The first linear function is, for example, a function representing a straight line whose value monotonically decreases and whose both ends are the first variational parameter $\beta_1$ in the first layer of the quantum circuit and the first variational parameter $\beta_P$ in the last layer of the quantum circuit. More specifically, the first sine function is a function representing a sine wave that becomes zero for the first layer and the last layer of the quantum circuit. More specifically, the first transformation formula is defined by the following formula (11).

$$\beta_l = \beta_1 + (\beta_P - \beta_1)(l-1)/(P-1) + \sum_{k=1}^{q'} v_k \sin[\pi k(l-1)/(P-1)] \quad ...(11)$$

The information processing device 100 stores the first transformation parameter according to the first transformation formula. More specifically, the first transformation parameter includes $\beta_1$ related to the first linear function and $\beta_P$. More specifically, the first transformation parameter includes $v_1, v_2, ...,$ and $v_{q'}$ related to the first sine function. Preferably, q' is less than P-2.

The information processing device 100 stores a second conversion formula that expresses the second variational parameter $\gamma_l$ using a number of second transformation parameters less than P. The second transformation formula allows the second transformation parameter to be converted into the second variational parameter $\gamma_l$. The second transformation formula is, for example, a combination of a second linear function representing a monotonically increasing straight line and a second sine function. The second linear function is a function representing a straight line whose value monotonically increases as the variable l indicating the order of layers increases. The second linear function is, for example, a function representing a straight line whose value monotonically increases and whose both ends are the second variational parameter $\gamma_1$ in the first layer of the quantum circuit and the second variational parameter $\gamma_P$ in the last layer of the quantum circuit. More specifically, the second sine function is a function representing a sine wave that becomes zero for the first layer and the last layer of the quantum circuit. More specifically, the second transformation formula is defined by the following formula (12).

$$\gamma_l = \gamma_1 + (\gamma_P - \gamma_1)(l-1)/(P-1) + \sum_{k=1}^{q} u_k \sin[\pi k(l-1)/(P-1)] \quad ...(12)$$

The information processing device 100 stores the second transformation parameter according to the second transformation formula. More specifically, the second transformation parameter includes $\gamma_1$ and $\gamma_P$ according to the second linear function. More specifically, the second transformation parameter includes $u_1, u_2, ...,$ and $u_q$ according to the second sine function. Preferably., q is less than P-2.

Here, the second transformation formula will be specifically described with reference to Fig. 7. Since the first transformation formula is the same as the second transformation formula, the description thereof will be omitted. In the example depicted in Fig. 7, P=7. The second transformation formula is, for example, a combination of a first linear function corresponding to the line segment 701 and a first sine function. As depicted in Fig. 7, the first linear function represents a monotonically increasing straight line having $\gamma_1$ and $\gamma_P$ as both ends. As depicted in Fig. 7, the second transformation formula corresponds to the curve 702 defined by the above expression (12), which is represented by a combination of the first linear function and the first sine function.

As depicted in Fig. 7, the information processing device 100 may easily express a linear parameter change corresponding to a linear operation in quantum annealing by setting the second transformation formula. In addition, the information processing device 100 may expand the correction term for the linear change in the second transformation formula by the first sine function.

In addition, the information processing device 100 may remove high-frequency components considered to be relatively unimportant while leaving low-frequency components considered to be relatively important by setting P-2q>0 and P-2q'>0. Therefore, the information processing device 100 may reduce the number of parameters whose values are to be directly updated, and may reduce the processing load and the processing time necessary to update the values of the parameters.

Description continues with reference to Fig. 6. The information processing device 100 sets initial values $\beta^i_1$, $\beta^i_P$, $v^i_1$, $v^i_2$, ..., and $v^i_q{}'$ of the first transformation parameters. For example, the information processing device 100 randomly sets initial values $\beta^i_1$, $\beta^i_P$, $v^i_1$, $v^i_2$, ..., and $v^i_q{}'$ of the first transformation parameters.

The information processing device 100 sets initial values $\gamma^i_1$, $\gamma^i_P$, $u^i_1$, $u^i_2$, ..., and $u^i_q$ of the second transformation parameters. For example, the information processing device 100 randomly sets the initial values $\gamma^i_1$, $\gamma^i_P$, $u^i_1$, $u^i_2$, ..., and $u^i_q$ of the second transformation parameters.

The information processing device 100 stores an optimization algorithm. The optimization algorithm defines a processing procedure for optimizing the first transformation parameter and the second transformation parameter. The optimization algorithm is based on, for example, the BFGS method.

(6-1) The information processing device 100 calculates the value of the first variational parameter $\beta=(\beta_1, \beta_2, ..., \beta_P)$ based on the current value of the first transformation parameter by referring to the first transformation formula according to the optimization algorithm. The information processing device 100 calculates the value of the second variational parameter $\gamma=(\gamma_1, \gamma_2, ..., \gamma_P)$ based on the current value of the second transformation parameter by referring to the second conversion formula according to the optimization algorithm.

(6-2) The information processing device 100 causes the quantum computing device 201 to execute a multilayer quantum circuit 600 according to the optimization algorithm. The quantum circuit 600 has P layers 610. The quantum circuit 600 includes, for each layer 610, a first partial circuit 611 representing the action of the mixer unitary operator and a second partial circuit 612 representing the action of the cost unitary operator. The quantum circuit 600 includes, for example, a measuring unit 620 for each qubit.

For example, the information processing device 100 generates an execution request requesting execution of the quantum circuit 600 one or more times, and transmits the execution request to the quantum computing device 201. The execution request includes, for example, the structure of the quantum circuit 600. The execution request includes, for example, the calculated value of the first variational parameter $\beta=(\beta_1, \beta_2, ..., \beta_P)$ and the calculated value of the second variational parameter $\gamma= (\gamma_1, \gamma_2, ..., \gamma_P)$. The execution request includes, for example, the number of times the quantum circuit 600 is to be executed.

(6-3) The quantum computing device 201 has a function of controlling qubits. The quantum computing device 201 receives the execution request from the information processing device 100. The quantum computing device 201 sets an initial quantum state for a qubit in response to the execution request. The quantum computing device 201 measures a variable sequence z one or more times by executing the quantum circuit 600 one or more times in response to the execution request.

The quantum computing device 201 executes, for example, the quantum circuit 600, develops the initial quantum state by applying the mixer unitary operator and the cost unitary operator to the initial quantum state, and specifies the trial quantum state. The quantum computing device 201 obtains the variable sequence z by, for example, measuring the specified trial quantum state by the measuring unit 620. The quantum computing device 201 transmits the variable sequence z obtained one or more times to the information processing device 100.

(6-4) The information processing device 100 refers to the cost function C(z) and calculates an expected value of the energy represented by the cost function C(z), based on the variable sequence z of one or more times. The information processing device 100 updates the value of the first transformation parameter and the value of the second transformation parameter in a direction of minimizing the expected value of the energy represented by the cost function C(z), based on the calculated expected value of the energy. Thus, the information processing device 100 may optimize the value of the first transformation parameter and the value of the second transformation parameter.

The information processing device 100 and the quantum computing device 201 repeatedly perform the series of the processes including the process (6-1), the process (6-2), the process (6-3), and the process (6-4) until a predetermined end condition is satisfied. Thus, the information processing device 100 may repeatedly optimize the value of the first transformation parameter and the value of the second transformation parameter.

(6-5) When the predetermined end condition is satisfied, the information processing device 100 calculates a solution to the combinatorial optimization problem based on the updated value of the first transformation parameter and the updated value of the second transformation parameter. For example, the information processing device 100 specifies and measures a trial quantum state multiple times using the quantum circuit 600 in which the value of the first variational parameter and the value of the second variational parameter are set.

More specifically, the information processing device 100 generates an execution request requesting execution of the quantum circuit 600 one or more times and transmits the execution request to the quantum computing device 201, thereby specifying and measuring the trial quantum state multiple times. The information processing device 100 receives a result of specifying and measuring the trial quantum state a plurality of times from the quantum computing device 201. The information processing device 100 calculates a solution to the combinatorial optimization problem by statistically processing the results of measuring the trial quantum state a plurality of times.

Accordingly, the information processing device 100 may reduce the number of parameters whose values are to be directly updated, and may reduce the processing load and the processing time necessary to calculate a solution to a combinatorial optimization problem. The information processing device 100 may easily increase the depth of the quantum circuit 600. Therefore, the information processing device 100 may easily calculate a solution to the combinatorial optimization problem with high accuracy.

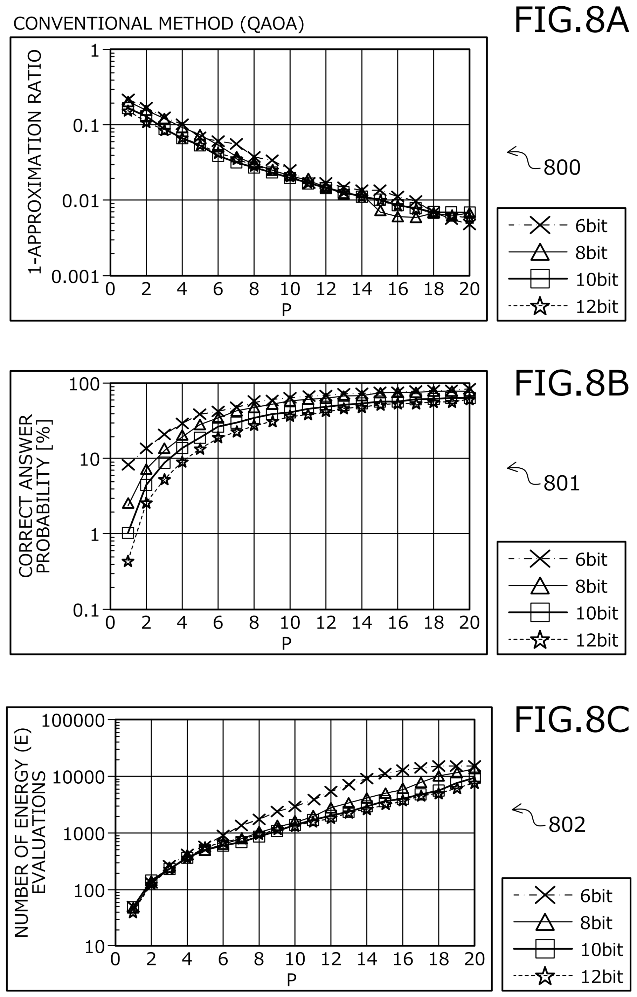

Next, an example of an effect of the information processing device 100 will be described by comparing a method of solving a combinatorial optimization problem by the information processing device 100 with a conventional method with reference to Figs. 8 to 11. In the following description, a method of solving a combinatorial optimization problem by the information processing device 100 may be referred to as "present method ". Conventional approaches are QAOA or Fourier methods.

Figs. 8, 9, 10, and 11 are explanatory diagrams depicting examples of effects. Here, the Approximation Ratio (A.R.) is evaluated in a case of calculating a solution to the energy minimization problem by the present method and the conventional method. Approximation Ratio is an approximation ratio. A.R. is $(E_{max}-E)/(E_{max}-E_{min})$. A.R. is 0-1. A.R. indicates that the closer the value is to 1, the better the quality of the solution to the minimization problem.

$E_{max}$ represents the highest energy. $E_{min}$ represents the lowest energy. The lowest energy corresponds to, for example, the energy in an optimal solution. $E_{max}$ and $E_{min}$ are obtained by full search of the Ising model, for example. E represents an expected value of the energy. The closer the expected value of the energy is to $E_{min}$, the closer the value of 1-A.R. is to 0. Therefore, as the expected value of the energy becomes closer to $E_{min}$, the closer the value of 1-A.R. is to 0.

Further, in the present method and the conventional method, the probability of obtaining the optimal solution is obtained by the sum of the squares of the absolute values of the probability amplitudes for the optimal solution obtained in advance by full search of the Ising model, based on the final quantum state vector. In the following description, the probability of obtaining an optimal solution may be referred to as a "correct answer probability".

In the examples depicted in Figs. 8 to 11, specifically, it is assumed that 100 energy minimization problems are prepared by setting the coefficient $c_{i,j}$ in the Ising model not including the first-order term as a uniform real number random number. The mathematical expression of the Ising model not including the first-order term is defined by, for example, the following expression (13). The parameter optimization algorithm used in the present method and the conventional method is the L-BFGS-B method. In the L-BFGS-B method, it is assumed that there is no differential expression input. In the L-BFGS-B method, the search range is not specified.

$$\sum_{i=1}^{N} \sum_{j=i+1}^{N} c_{i,j} \, z_i \, z_j \quad \dots (13)$$

With respect to a case where the solutions of the prepared 100 energy minimization problems are calculated by the present method and the conventional method, average values of 1-A.R., the correct answer probability, and the number of times of calculating the expected value of the energy are calculated. In the following description, the number of time the expected value of the energy is calculated may be referred to as "the number of energy evaluations". Here, Figs. 8A to 8C are described.

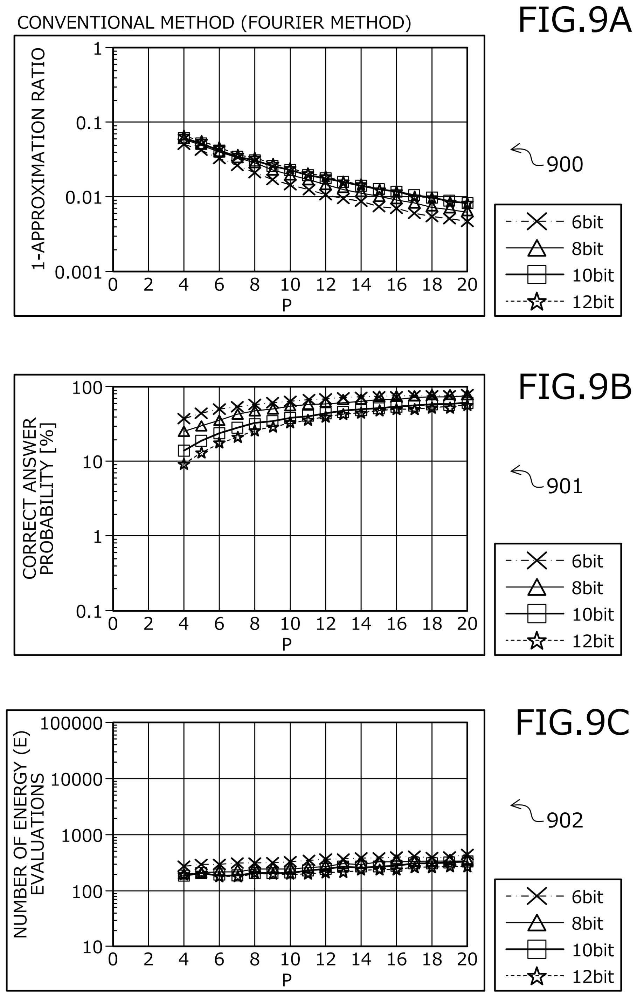

Graphs 800 to 802 in Figs. 8A to 8C correspond to a case where solutions of the prepared 100 energy minimization problems are calculated for different numbers of qubits by QAOA, which is a conventional method. Here, the initial values of the variational parameters are assumed to be $[\gamma_l, \beta_l]=[0, 0.01\pi]$ (l=1 to P). Graph 800 depicts changes in the average value 1-A.R. with respect to changes in P. Graph 801 depicts changes in the average value of the correct answer probabilities with respect to changes in P. Graph 802 depicts changes in the average value of the number of energy evaluations with respect to changes in P. Here, Figs. 9A to 9C are described.

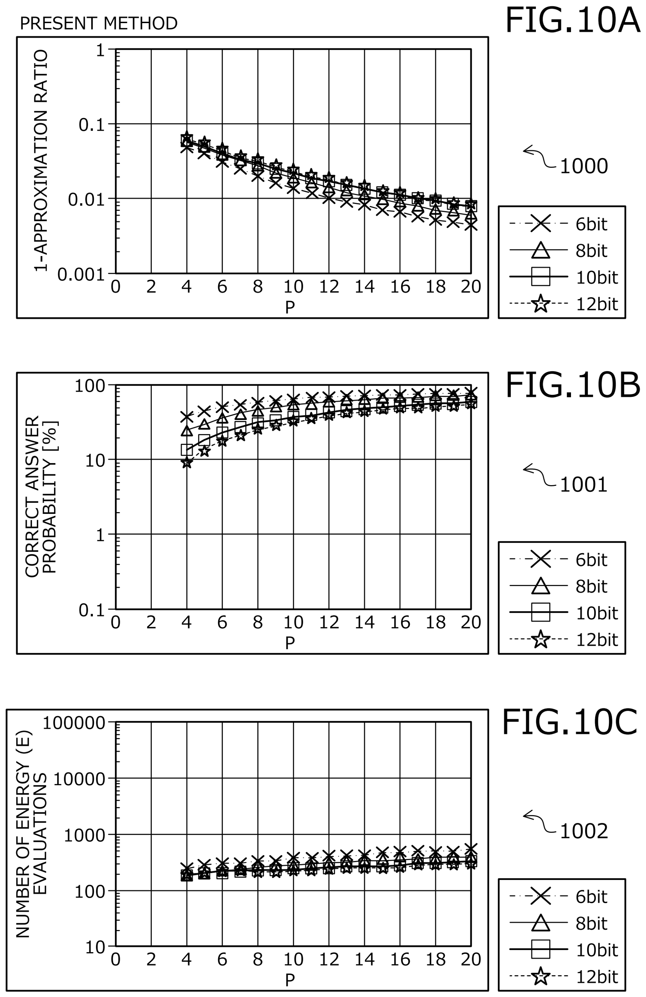

Graphs 900 to 902 in Figs. 9A to 9C correspond to a case where solutions of the prepared 100 energy minimization problems are calculated by the Fourier method which is the conventional method. It is assumed that eight transformation parameters are used in the Fourier method. Here, the initial values of the transformation parameters are assumed to be $[u_1, u_2, u_3, u_4, v_1, v_2, v_3, v_4]=[0.1\pi, 0, 0, 0]; 0.1\pi, 0, 0, 0]$. Graph 900 depicts variation the average value of 1-A.R. with respect to changes in P. Graph 901 depicts variation of the average value of the correct answer probabilities with respect to changes in P. Graph 902 depicts variation of the average value of the number of energy evaluations with respect to changes in P. Here, Figs. 10A to 10C are described.

Graphs 1000 to 1002 in Figs. 10A to 10C correspond to a case where solutions of the prepared 100 energy minimization problems are calculated by the present technique. It is assumed that the number of transformation parameters used in this method is eight. Here, it is assumed that the initial values of the transformation parameters are $[\gamma_1, \gamma_P, u_1, u_2, \beta_1, \beta_P, v_1, v_2]=[0.01\pi, 0.1\pi, 0,0; 0.1\pi, 0.01\pi, 0,0]$. Graph 1000 depicts changes in 1-A.R. with respect to changes in P. Graph 1001 depicts changes in the average value of the correct answer probabilities with respect to changes in P. Graph 1002 depicts changes in the average value of the number of energy evaluations with respect to changes in P.

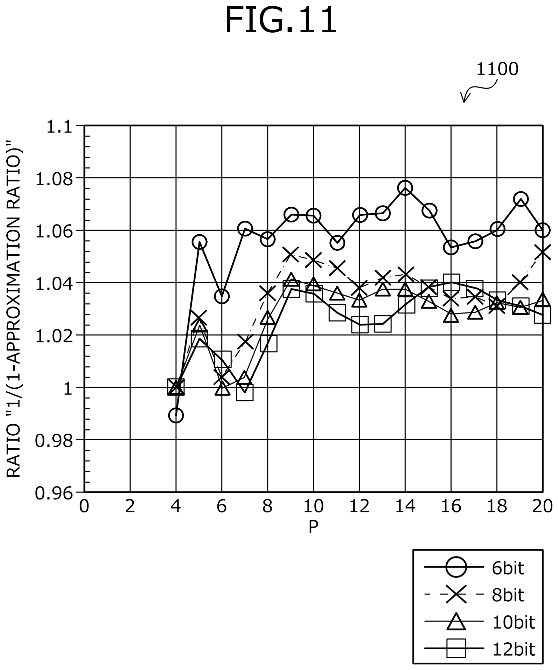

As depicted in Figs. 8A to 10C, in the present method, 1-A.R. and the average value of the correct answer probabilities are the same values as those of QAOA which is a conventional method. In other words, the present method may accurately calculate a solution to the energy minimization problem, similarly to the QAOA which is the conventional method. In addition, in this method, as P increases, the average value of the number of energy evaluations may be reduced. In other words, the present technique may reduce the processing load and the processing time necessary for calculating a solution to the energy minimization problem. Here, Fig. 11 is described.

Graph 1100 in Fig. 11 depicts the ratio of the average value of 1-A.R. in the present method to the average value of 1-A.R. in the conventional Fourier method. As depicted in Fig. 11, the average value of 1-A.R. in the present method is better than that of the conventional Fourier method. In other words, the present method may calculate a solution to the energy minimization problem more accurately as compared to the conventional Fourier method.

As described, the information processing device 100 may represent the first variational parameter $\beta$ and the second variational parameter $\gamma$ by a transformation parameter that specifies a straight line connecting values at I=1 and I=P and a transformation parameter that specifies a sine wave that is zero for I=1 and I=P. The sine wave represents the correction term. P is the number of layers of the quantum circuit 600.

Thus, the information processing device 100 may reduce the number of parameters to be directly updated. A parameter to be directly updated by the information processing device 100 is a transformation parameter. The information processing device 100 indirectly updates the first variational parameter $\beta$ and the second variational parameter $\gamma$ based on the transformation parameter.

Thus, the information processing device 100 may reduce the processing load and the processing time necessary to solve the combinatorial optimization problem. For example, the information processing device 100 may reduce the number of energy evaluations. In addition, the information processing device 100 performs 1-A.R. and the average value of the correct answer probabilities may be improved.

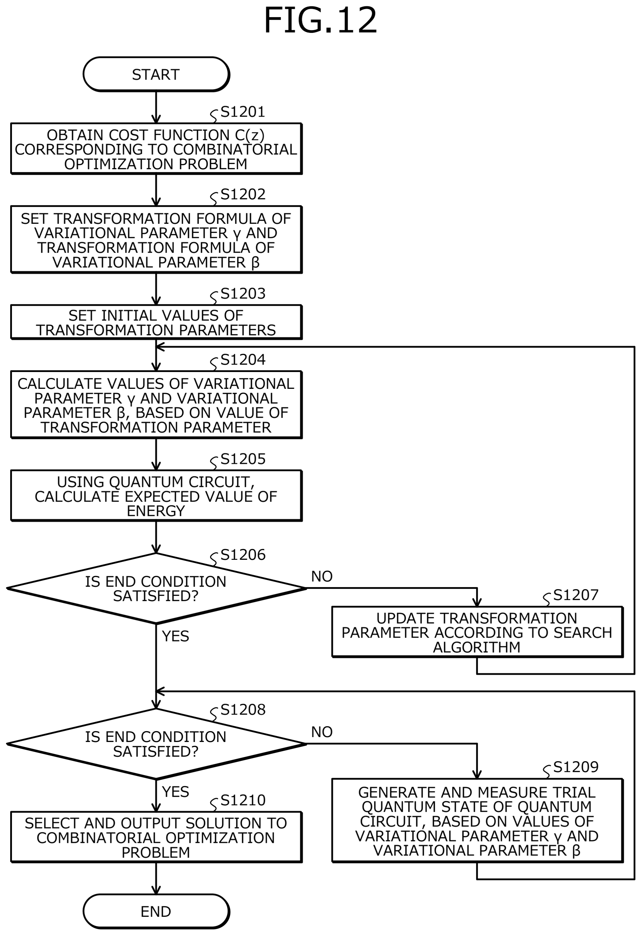

Next, an example of an overall processing procedure executed by the information processing device 100 is described with reference to Fig. 12. The overall processing is implemented by, for example, the CPU 301, storage areas such as the memory 302 and the recording medium 305, and the network I/F 303 depicted in Fig. 3.

Fig. 12 is a flowchart depicting an example of the overall processing procedure. In Fig. 12, the information processing device 100 obtains a cost function C(z) corresponding to a combinatorial optimization problem (step S1201).

Next, the information processing device 100 sets a transformation formula of the variational parameter $\gamma$ and a transformation formula of the variational parameter $\beta$ (step S1202). Then, the information processing device 100 sets initial values of transformation parameters (step S1203).

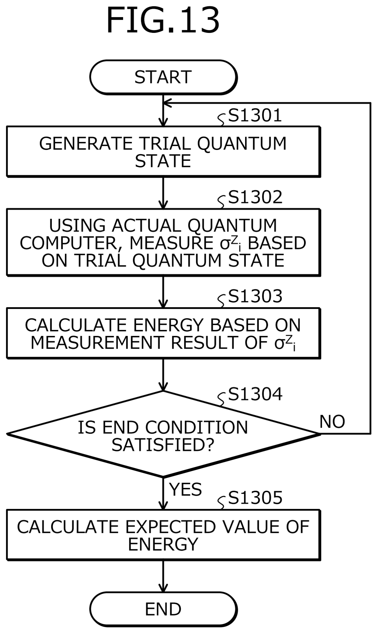

Next, the information processing device 100 calculates the values of the variational parameter $\gamma$ and the variational parameter $\beta$ based on the value of the transformation parameter with reference to the set transformation formula (step S1204). Next, the information processing device 100, using the quantum circuit, calculates an expected value of the energy by executing a calculation process described later with reference to Fig. 13 (step S1205).

Then, the information processing device 100 determines whether an end condition is satisfied (step S1206). Here, when the end condition is not satisfied (step S1206: NO), the information processing device 100 proceeds to the process at step S1207. On the other hand, when the end condition is satisfied (step S1206: YES), the information processing device 100 proceeds to the process at step S1208.

At step S1207, the information processing device 100 updates the transformation parameter according to the search algorithm (step S1207). Then, the information processing device 100 returns to the process at step S1204.

At step S1208, the information processing device 100 determines whether an end condition is satisfied (step S1208). Here, when the end condition is not satisfied (step S1208: NO), the information processing device 100 proceeds to the process at step S1209. On the other hand, when the end condition is satisfied (step S1208: YES), the information processing device 100 proceeds to the process at step S1210.

At step S1209, the information processing device 100 generates and measures a trial quantum state of the quantum circuit based on the values of the variational parameter $\gamma$ and the variational parameter $\beta$ (step S1209). Then, the information processing device 100 returns to the process at step S1208.

At step S1210, the information processing device 100 selects and outputs the solution to the combinatorial optimization problem based on the measurement result (step S1210). Then, the information processing device 100 ends the entire processing. Accordingly, the information processing device 100 may accurately solve the combinatorial optimization problem.

Next, an example of a procedure of a calculation process executed by the information processing device 100 using an actual quantum computer is described with reference to Fig. 13. The actual machine of the quantum computer is, for example, the quantum computing device 201. The information processing device 100 may be an actual machine of a quantum computer. The calculation process is implemented by, for example, the CPU 301, a storage area such as the memory 302 or the recording medium 305, and the network I/F 303 depicted in Fig. 3.

Fig. 13 is a flowchart depicting an example of the procedure of the calculation process. In Fig. 13, the information processing device 100 generates a trial quantum state by executing a quantum circuit using an actual quantum computer (step S1301).

Next, the information processing device 100 measures $\sigma^z_i$ based on the trial quantum state using the actual quantum computer (step S1302). Then, the information processing device 100 calculates the energy based on the measurement result of $\sigma^z_i$ (step S1303). For example, the information processing device 100 obtains a sample value of the energy by substituting $z_i = \pm 1$ obtained as a result of measuring $\sigma^z_i$ into the cost function, and calculates the energy based on an average value of multiple obtained sample values.

Thereafter, the information processing device 100 determines whether an end condition for the accuracy of the expected value of the energy is satisfied (step S1304). Here, when the end condition is not satisfied (step S1304: NO), the information processing device 100 returns to the process at step S1301. On the other hand, when the end condition is satisfied (step S1304: YES), the information processing device 100 calculates an expected value of the energy (step S1305) and ends the calculation process.

Here, the information processing device 100 may change the sequence of the processes of some steps of the flowcharts depicted in Figs. 12 and 13. In addition, the information processing device 100 may omit the processes of some steps of the flowcharts depicted in Figs. 12 and 13. The entire process depicted in Fig. 12 is considered to be executed, for example, in response to the information processing device 100 obtaining a processing request requesting to solve a combinatorial optimization problem.

Next, an application example of the information processing device 100 is described. The information processing device 100 may be applied to, for example, a case of solving a combinatorial optimization problem for searching for a traveling route of a mobile object. For example, the information processing device 100 may be applied to a case of solving a combinatorial optimization problem for creating a work table of employees. For example, the information processing device 100 may be applied to a case of solving a combinatorial optimization problem for creating a manufacturing plan of a product.

As described above, according to the information processing device 100, it is possible to set the quantum circuit including the first partial circuit representing the action of the mixer unitary operator and the second partial circuit representing the action of the cost unitary operator for each layer, which are used when solving the combinatorial optimization problem. According to the information processing device 100, it is possible to set, for the quantum circuit, the first function that is a combination of the monotonically decreasing function and the first sine function and represents the first variational parameter related to the first partial circuit. According to the information processing device 100, it is possible to set, for the quantum circuit, the second function that is a combination of the monotonically increasing function and the second sine function and represents the second variational parameter related to the second partial circuit. According to the information processing device 100, it is possible to update the value of the first transformation parameter related to the first function and the value of the second transformation parameter related to the second function so as to optimize the expected value of the cost function corresponding to the combinatorial optimization problem using the quantum circuit. Accordingly, the information processing device 100 may accurately calculate a solution to the combinatorial optimization problem. The information processing device 100 may reduce the processing load and the processing time necessary to calculate a solution to a combinatorial optimization problem.

According to the information processing device 100, the first function may be set using a monotonically decreasing function representing a monotonically decreasing straight line. According to the information processing device 100, the second function may be set using a monotonically increasing function representing a monotonically increasing straight line. Accordingly, the information processing device 100 may appropriately set the first function and the second function from the viewpoint of quantum annealing.

According to the information processing device 100, it is possible to use a monotonically decreasing function representing a monotonically decreasing straight line having the value of the first variational parameter related to the first partial circuit in the first layer of the quantum circuit and the value of the first variational parameter related to the first partial circuit in the last layer of the quantum circuit as both ends. According to the information processing device 100, it is possible to use the first sine function that becomes zero for the first layer and the last layer of the quantum circuit. According to the information processing device 100, it is possible to use a monotonically increasing function representing a monotonically increasing straight line having the value of the second variational parameter related to the second partial circuit in the first layer of the quantum circuit and the value of the second variational parameter related to the second partial circuit in the last layer of the quantum circuit as both ends. According to the information processing device 100, it is possible to use the second sine function that becomes zero for the first layer and the last layer of the quantum circuit. Accordingly, the information processing device 100 may appropriately set the first function and the second function from the viewpoint of quantum annealing.

According to the information processing device 100, a series of processes may be repeatedly performed until a predetermined end condition is satisfied. According to the information processing device 100, in the series of processes, the value of the first variational parameter and the value of the second variational parameter may be calculated based on the value of the first transformation parameter and the value of the second transformation parameter. According to the information processing device 100, in the series of processes, the expected value of the cost function may be calculated based on the calculated value of the first variational parameter and the calculated value of the second variational parameter. According to the information processing device 100, in the series of processes, when the predetermined end condition is not satisfied, the value of the first transformation parameter and the value of the second transformation parameter may be updated based on the calculated expected value. Accordingly, the information processing device 100 may optimize the first transformation parameter and the second transformation parameter, and may accurately calculate a solution to the combinatorial optimization problem.

According to the information processing device 100, the first function may be set using a monotonically decreasing function representing a monotonically decreasing curve. According to the information processing device 100, the second function may be set using a monotonically increasing function representing a monotonically increasing curve. Accordingly, the information processing device 100 may appropriately set the first function and the second function from the viewpoint of quantum annealing.

In the embodiments disclosed in the present specification, it is assumed that the values of $\beta$ and $\gamma$ are positive values. However, the values of $\beta$ and $\gamma$ may be negative values with consideration that the energy minimization problem may be handled as an energy maximization problem by inverting the sign of the cost function. In this case, for example, the straight line 141 depicted in Fig. 1 is a monotonically decreasing straight line, and the straight line 151 is a monotonically increasing straight line. In other words, it may be said that the straight line 141 is a straight line whose absolute value monotonically decreases, and the straight line 151 is a straight line whose absolute value monotonically increases. Similarly, a monotonically decreasing curve may be said to be a curve whose absolute value monotonically increases, and a monotonically increasing curve may be said to be a curve whose absolute value monotonically increases.

The information processing method described in the present embodiment may be implemented by executing a prepared program on a computer such as a personal computer and a workstation. The program is stored on a non-transitory, computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

According to the embodiment, it is possible to improve the accuracy of solving a combinatorial optimization problem.

All examples and conditional language provided herein are intended for pedagogical purposes of aiding the reader in understanding embodiments of the invention and the concepts contributed by the inventor to further the art, and are not to be construed as limitations to such specifically recited examples and conditions, nor does the organization of such examples in the specification relate to a depicting of the superiority and inferiority of embodiments of the invention. Although one or more embodiments of the present invention have been described in detail, it should be understood that the various changes, substitutions, and alterations could be made hereto without departing from the spirit and scope of the invention.

In any of the above aspects, the various features may be implemented in hardware, or as software modules running on one or more processors/computers. Embodiments provide a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodiment may be stored on a non-transitory computer-readable medium, or it could, for example, be in the form of a signal such as a downloadable data signal provided from an Internet website, or it could be in any other form.

**Claims**

1. An information processing program for causing a computer to execute a process, the process comprising:

   setting a first function and a second function, for a quantum circuit including, for each layer, a first partial circuit representing an action of a mixer unitary operator and a second partial circuit representing an action of a cost unitary operator, the quantum circuit being used when solving a combinatorial optimization problem, the first function representing a first variational parameter related to the first partial circuit, the first function being a combination of a monotonically decreasing function whose absolute value monotonically decreases and a first sine function, and the second function representing a second variational parameter related to the second partial circuit, the second function being a combination of a monotonically increasing function whose absolute value monotonically increases and a second sine function; and

calculating a solution to the combinatorial optimization problem by updating a value of a first transformation parameter related to the first function and a value of a second transformation parameter related to the second function so as to optimize an expected value of a cost function corresponding to the combinatorial optimization problem by using the quantum circuit after setting the first function and the second function.

2. The information processing program according to claim 1, wherein

the monotonically decreasing function is a function representing a straight line whose absolute value monotonically decreases, and

the monotonically increasing function is a function representing a straight line whose absolute value monotonically increases.

3. The information processing program according to claim 2, wherein

the monotonically decreasing function represents a straight line whose absolute value monotonically decreases and whose ends are a value of the first variational parameter related to the first partial circuit in a first layer of the quantum circuit and the value of the first variational parameter related to the first partial circuit in a last layer of the quantum circuit,

the first sine function is zero for the first layer and the last layer of the quantum circuit,

the monotonically increasing function represents a straight line whose absolute value monotonically increases and whose ends are a value of the second variational parameter related to the second partial circuit in the first layer of the quantum circuit and the value of the second variational parameter related to the second partial circuit in the last layer of the quantum circuit, and

the second sine function is zero for the first layer and the last layer of the quantum circuit.

4. The information processing program according to any one of claims 1 to 3, wherein the calculating includes:

calculating a value of the first variational parameter and a value of the second variational parameter based on the value of the first transformation parameter and the value of the second transformation parameter;

calculating the expected value of the cost function based on the calculated value of the first variational parameter and the calculated value of the second variational parameter; and

updating the value of the first transformation parameter and the value of the second transformation parameter, based on the calculated expected value when an end condition is not satisfied.

5. The information processing program according to claim 1, wherein

the monotonically decreasing function represents a curve whose absolute value monotonically decreases, and

the monotonically increasing function represents a curve whose absolute value monotonically increases.

6. An information processing method executed by a computer, the method comprising:

setting a first function and a second function, for a quantum circuit including, for each layer, a first partial circuit representing an action of a mixer unitary operator and a second partial circuit representing an action of a cost unitary operator, the quantum circuit being used when solving a combinatorial optimization problem, the first function representing a first variational parameter related to the first partial circuit, the first function being a combination of a monotonically decreasing function whose absolute value monotonically decreases and a first sine function, and the second function representing a second variational parameter related to the second partial circuit, the second function being a combination of a monotonically increasing function whose absolute value monotonically increases and a second sine function; and

calculating a solution to the combinatorial optimization problem by updating a value of a first transformation parameter related to the first function and a value of a second transformation parameter related to the second function so as to optimize an expected value of a cost function corresponding to the combinatorial optimization problem by using the quantum circuit after setting the first function and the second function.

7. An information processing device, comprising:

a memory; and
a processor coupled to the memory, the processor configured to:

set a first function and a second function, for a quantum circuit including, for each layer, a first partial circuit representing an action of a mixer unitary operator and a second partial circuit representing an action of a cost unitary operator, the quantum circuit being used when solving a combinatorial optimization problem, the first function representing a first variational parameter related to the first partial circuit, the first function being a combination of a monotonically decreasing function whose absolute value monotonically decreases and a first sine function, and the second function representing a second variational parameter related to the second partial circuit, the second function being a combination of a monotonically increasing function whose absolute value monotonically increases and a second sine function; and
calculate a solution to the combinatorial optimization problem by updating a value of a first transformation parameter related to the first function and a value of a second transformation parameter related to the second function so as to optimize an expected value of a cost function corresponding to the combinatorial optimization problem by using the quantum circuit after setting the first function and the second function.

# FIG.1

# FIG.2

# FIG.3

# FIG.4

401
CPU

402
MEMORY

201

400

403
NETWORK I/F

404
RECORDING MEDIUM I/F

406
HOUSING I/F

405
RECORDING MEDIUM

407
QUANTUM COMPUTING HOUSING

210
NETWORK

ROOM TEMPERATURE SIDE  INPUT  OUTPUT  ROOM TEMPERATURE SIDE

MICROWAVE PULSE GENERATOR

INPUT

MICROWAVE PULSE DEMODULATOR

OUTPUT

LOW NOISE AMPLIFIER

(10mK)
QUANTUM STATE TRANSFER TECHNOLOGY

QUBIT CHIP

QUBIT CHIP

CRYOGENIC DILUTION REFRIGERATOR (HOUSING)

# FIG.5

100

500

STORAGE
UNIT

501

OBTAINING
UNIT

502

SETTING
UNIT

503

UPDATING
UNIT

504

OUTPUT
UNIT

# FIG.6

VARIABLE STRING OF PROBLEM
(N: BIT COUNT): $\mathbf{z} = z_N \ldots z_2 z_1 \quad (z_i = \pm 1)$

INFORMATION
PROCESSING DEVICE ⁓100

COST FUNCTION (Ising model): $C(\mathbf{z}) = \sum_{i=1}^{N} c_i\, z_i + \sum_{i=1}^{N} \sum_{j=i+1}^{N} c_{i,j}\, z_i\, z_j$

VARIATIONAL PARAMETER: $\boldsymbol{\gamma} = (\gamma_1, \gamma_2, \ldots, \gamma_P),\ \boldsymbol{\beta} = (\beta_1, \beta_2, \ldots, \beta_P)$

VARIATIONAL PARAMETER
TRANSFORMATION FORMULA: $\gamma_l = \gamma_1 + (\gamma_P - \gamma_1)(l-1)/(P-1) + \sum_{k=1}^{q} u_k \sin[\pi k(l-1)/(P-1)]$

$\beta_l = \beta_1 + (\beta_P - \beta_1)(l-1)/(P-1) + \sum_{k=1}^{q'} v_k \sin[\pi k(l-1)/(P-1)]$

TRANSFORMATION PARAMETER: $\gamma_1, \gamma_P, u_1, \ldots, u_q, \beta_1, \beta_P, v_1, \ldots, v_{q'}$

INITIAL VALUE OF
TRANSFORMATION PARAMETER: $\gamma^i_1, \gamma^i_P, u^i_1, \ldots, u^i_q, \beta^i_1, \beta^i_P, v^i_1, \ldots, v^i_{q'}$

OPTIMIZATION ALGORITHM: BFGS METHOD, ETC.

VARIATIONAL PARAMETER
$(\boldsymbol{\gamma}, \boldsymbol{\beta}) = (\gamma_1, \gamma_2, \ldots, \gamma_P, \beta_1, \beta_2, \ldots, \beta_P)$

600

MEASUREMENT RESULT $\mathbf{z} = z_N \cdots z_2 z_1$
(FOR 1 SESSION OR MULTIPLE SESSIONS)

QUANTUM
COMPUTING ⁓201
DEVICE

INITIAL QUANTUM STATE

611  610  612      611  610  612

MEASURE

$|+\rangle$

$|+\rangle$

$\vdots$

$|+\rangle$

$U(C, \gamma_1)$   $U(B, \beta_1)$   $\cdots$   $U(C, \gamma_P)$   $U(B, \beta_P)$

⁓620

⁓620

⁓620

$\mathbf{z} = z_N \cdots z_2 z_1$

$l = 1,$  $\cdots$  $, l = P$

# FIG.7

$\gamma_1 + (\gamma_P - \gamma_1)(l-1)/(P-1)$ : SECOND LINEAR FUNCTION

701

702

SECOND
TRANSFORMATION
FORMULA

CONVENTIONAL METHOD (QAOA)

## FIG.8A

800

## FIG.8B

801

## FIG.8C

802

CONVENTIONAL METHOD (FOURIER METHOD)

FIG.9A

900

Legend:
- –·✕·– 6bit
- —△— 8bit
- —□— 10bit
- ····☆···· 12bit

FIG.9B

901

Legend:
- –·✕·– 6bit
- —△— 8bit
- —□— 10bit
- ····☆···· 12bit

FIG.9C

902

Legend:
- –·✕·– 6bit
- —△— 8bit
- —□— 10bit
- ····☆···· 12bit

PRESENT METHOD

# FIG.10A

## FIG.10B

## FIG.10C

# FIG.11

1100

# FIG.12

START
↓
S1201
OBTAIN COST FUNCTION C(z) CORRESPONDING TO COMBINATORIAL OPTIMIZATION PROBLEM
↓
S1202
SET TRANSFORMATION FORMULA OF VARIATIONAL PARAMETER γ AND TRANSFORMATION FORMULA OF VARIATIONAL PARAMETER β
↓
S1203
SET INITIAL VALUES OF TRANSFORMATION PARAMETERS
↓
S1204
CALCULATE VALUES OF VARIATIONAL PARAMETER γ AND VARIATIONAL PARAMETER β, BASED ON VALUE OF TRANSFORMATION PARAMETER
↓
S1205
USING QUANTUM CIRCUIT, CALCULATE EXPECTED VALUE OF ENERGY
↓
S1206
IS END CONDITION SATISFIED? — NO →
S1207
UPDATE TRANSFORMATION PARAMETER ACCORDING TO SEARCH ALGORITHM

YES
↓
S1208
IS END CONDITION SATISFIED? — NO →
S1209
GENERATE AND MEASURE TRIAL QUANTUM STATE OF QUANTUM CIRCUIT, BASED ON VALUES OF VARIATIONAL PARAMETER γ AND VARIATIONAL PARAMETER β

YES
↓
S1210
SELECT AND OUTPUT SOLUTION TO COMBINATORIAL OPTIMIZATION PROBLEM
↓
END

# FIG.13

START

S1301

GENERATE TRIAL QUANTUM STATE

S1302

USING ACTUAL QUANTUM COMPUTER, MEASURE $\sigma^z_i$ BASED ON TRIAL QUANTUM STATE

S1303

CALCULATE ENERGY BASED ON MEASUREMENT RESULT OF $\sigma^z_i$

S1304

IS END CONDITION SATISFIED?

NO

YES

S1305

CALCULATE EXPECTED VALUE OF ENERGY

END

**EUROPEAN SEARCH REPORT**

Europäisches Patentamt
European Patent Office
Office européen des brevets

**Application Number**

EP 25 21 8788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUNLONG YU ET AL: "Quantum Approximate Optimization Algorithm with Adaptive Bias Fields", ARXIV.ORG CORNELL UNIVERSITY LIBRARY, 201 OLIN LIBRARY CORNELL UNIVERSITY ITHACA, NY 14853, 22 December 2021 (2021-12-22), XP091109127, * abstract * * Section "Supplemental materials" * ----- | 1-7 | INV. G06N10/20 G06N10/60 |

|  |  |  | TECHNICAL FIELDS SEARCHED (IPC) |
|---|---|---|---|
|  |  |  | G06N |

The present search report has been drawn up for all claims

| Place of search | Date of completion of the search | Examiner |
|---|---|---|
| The Hague | 22 April 2026 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10846366 B
- JP 2021536610 W
- JP 2023103427 A

**Non-patent literature cited in the description**

- **FARHI, EDWARD ; JEFFREY GOLDSTONE ; SAM GUTMANN**. A quantum approximate optimization algorithm.. *arXiv preprint arXiv:1411.4028*, 2014